# EUROPEAN PATENT APPLICATION

(11) **EP 4 486 033 A1**
(43) Date of publication of application: **01.01.2025**
(21) Application number: 23795533.1
(22) Date of filing: 27.04.2023
(51) Int. Cl.: H04W 72/04

(54) **CELL BEAM INDICATION METHOD AND RELATED DEVICE**

(30) Priority: 28.04.2022 CN 202210463344
(71) Applicant: Huawei Technologies Co., Ltd., Shenzhen, Guangdong 518129 (CN)
(72) Inventor: FAN, Bo, Shenzhen, Guangdong 518129 (CN); YUAN, Shitong, Shenzhen, Guangdong 518129 (CN); LI, Fang, Shenzhen, Guangdong 518129 (CN)
(74) Representative: Maiwald GmbH
(86) International application number: PCT/CN2023/091105
(87) International publication number: WO 2023/208101

(57) **Abstract**

Embodiments of this application disclose a cell beam indication method and a related device. The method includes: A terminal device receives configuration information sent by a network device, where the configuration information is used to configure at least one cell group, and each cell group includes a first cell and a second cell. The terminal device determines, based on a first beam indicated via a first cell in a first cell group, a second beam corresponding to the first cell group, where the first cell group includes at least one multi-beam cell. The terminal device determines, based on the second beam, a third beam of a second cell in the first cell group. This method may be applied to a multi-beam cell, to resolve a problem that a common beam cannot be indicated for the multi-beam cell in a form of a cell group.

## Description

This application claims priority to Chinese Patent Application No. 202210463344.0, filed with the China National Intellectual Property Administration on April 28, 2022 and entitled "CELL BEAM INDICATION METHOD AND RELATED DEVICE THEREFOR", which is incorporated herein by reference in its entirety.

### TECHNICAL FIELD

This application relates to the field of wireless communication technologies, and in particular, to a cell beam indication method and a related device therefor.

### BACKGROUND

In a 5th generation (5th generation, 5G) mobile communication system, high-frequency communication may be used, that is, data is transmitted using a super high frequency band (>6 GHz) signal. In high-frequency communication, an analog beam technology is used to form a signal similar to a light beam (referred to as an analog beam, beam for short), to increase a transmission distance. Both a network device and a terminal device need to use a beam for transmission.

In an R15/16 protocol, a beam for each channel or reference signal is independent, and the corresponding beam needs to be indicated for each channel and reference signal using independent signaling. In an R17 protocol, a same beam may be used for a plurality of channels and reference signals, and one beam is indicated by one piece of signaling, where the beam is used for a plurality of channels and reference signals, so that beam indication signaling overheads are reduced. Abeam for a plurality of channels and reference signals is referred to as a common beam. In the R17 protocol, the common beam is indicated by downlink control information (Downlink Control Information, DCI) signaling. The common beam indicated by the DCI signaling may be used for a single cell, or may be used for a plurality of cells. This specifically depends on whether the network device configures the plurality of cells in one cell group for beam sharing. Specifically, the network device may configure the plurality of cells in the one cell group, and the same common beam may be used in all cells in the cell group. In this way, the network device needs to indicate one common beam in only one cell in the cell group, and the common beam can be used in all the cells in the cell group. The cell in which the common beam is indicated, that is, a cell that sends the DCI signaling, is referred to as a reference cell. Such grouping can further reduce the beam indication signaling overheads.

A cell may be deployed on one base station, or may be deployed on a plurality of base stations. A cell deployed on a plurality of base stations may use the plurality of base stations to transmit data for the terminal device, and each base station may use one common beam. Therefore, the cell deployed on the plurality of base stations needs to use a plurality of common beams. For ease of description, a cell deployed on a single base station is referred to as a single-beam cell for short, and the cell deployed on the plurality of base stations is referred to as a multi-beam cell. In the current R17 protocol, when a common beam is indicated in a form of a cell group, only the single-beam cell can be configured as a cell group. For the multi-beam cell, how to uniformly indicate a common beam in the form of the cell group is not involved in a related technology. Therefore, for the multi-beam cell, how to indicate the common beam in the form of the cell group needs to be further resolved.

### SUMMARY

Embodiments of this application provide a cell beam indication method and a related device therefor, to indicate a common beam for a multi-beam cell in a form of a cell group.

According to a first aspect, an embodiment of this application provides a cell beam indication method, including:
A terminal device receives configuration information sent by a network device, where the configuration information is used to configure at least one cell group, and each cell group includes a first cell and a second cell. The first cell may be defined as a reference cell, and the second cell may be defined as another cell in the cell group.

The terminal device receives a first beam indicated by the network device using signaling in a first cell in a first cell group, where the first cell group includes at least one multi-beam cell. The network device sends DCI signaling to the terminal device via the reference cell in the cell group, to indicate a common beam of the reference cell. When the reference cell is a multi-beam cell, there are a plurality of beams in the first beam sent. When the reference cell is a single-beam cell, there is only one beam in the first beam.

The terminal device determines a second beam based on the first beam, where the first beam is a beam indicated via the first cell in the first cell group, and the second beam is a beam corresponding to the first cell group. Because the reference cell is located in the first cell group, a beam in the second beam corresponding to the first cell group is one or more beams in the first beam.

The terminal device determines a third beam based on the second beam, where the third beam is a beam corresponding to a second cell in the first cell group. Because the second cell is located in the first cell group, the second cell may determine, based on the second beam, a common beam available to the cell. The available common beam forms the third beam.

In this embodiment, the terminal device first receives the configuration information sent by the network device, to obtain a cell grouping status, where a cell group set in cell grouping information includes at least one cell group that includes a multi-beam cell. Then, the terminal device receives a common beam indication sent by the network device via the reference cell, to determine the common beam used by the reference cell. Next, the terminal device determines, based on the common beam used by the reference cell, a common beam of the cell group in which the reference cell is located. Finally, the terminal device determines a common beam of the another cell in the group based on the common beam of the cell group. Because there is the multi-beam cell in the cell group, it means that the reference cell and/or the another cell in the cell group may be multi-beam cells, and the reference cell and/or the another cell in the cell group may transmit data using at least two common beams based on a cell type of the reference cell and/or a cell type of the another cell in the cell group. Therefore, beam indication signaling overheads are reduced, and a problem that a common beam cannot be indicated for a multi-beam cell in a form of a cell group is resolved.

In a possible design, in a first implementation of the first aspect of embodiments of this application,
if the first cell is a single-beam cell, the second cell is a multi-beam cell, and the second cell belongs to only the first cell group,
that is, the first beam includes only one beam,
the second beam is the first beam, and the third beam is the second beam.

When the first cell is a single-beam cell, as the reference cell, the first cell can indicate the only one beam. Therefore, the first beam includes the only one beam. Because the first beam includes the only one beam, as a common beam of the first cell group, the second beam also includes only one beam. When the second beam includes the only one beam, and the second cell belongs to only the first cell group, the third beam is the second beam, that is, the third beam also includes only one beam. In other words, the first beam, the second beam, and the third beam are a same beam.

In this embodiment, for a case in which the first cell is a single-beam cell, the second cell is a multi-beam cell, and the first cell and the second cell belong to only the first cell group, a solution for indicating a common beam of the second cell is proposed, to resolve a problem in a related technology that a common beam cannot be indicated in a form of a cell group in this case.

In a possible design, in a second implementation of the first aspect of embodiments of this application,
if the first cell is a single-beam cell, the second cell is a multi-beam cell, the second cell also belongs to at least one other cell group, and each of the other cell group to which the second cell belongs corresponds to one beam,
that is, the first beam includes only one beam,
the second beam is the first beam.

The third beam includes the second beam and the beam corresponding to each of the other cell group.

When the first cell is a single-beam cell, as the reference cell, the first cell can indicate the only one beam. Therefore, the first beam includes the only one beam. Because the first beam includes the only one beam, and the second beam is used as a common beam of the first cell group, the second beam is the first beam, that is, also includes only one beam. Because the second cell also belongs to the other cell group, and each of the other cell group to which the second cell belongs corresponds to one beam, the third beam corresponding to the second cell includes the second beam and the beam corresponding to each of the other cell group. In other words, the second cell uses common beams of a plurality of cell groups as common beams of the cell.

Optionally, that the third beam includes the second beam and the beam corresponding to each of the other cell group specifically includes:
using, in a grouping order of the first cell group and each of the other cell group in the cell grouping information, a beam corresponding to an i^{th} cell group in the first cell group and the other cell group as an i^{th} beam in the third beam, where i is an integer greater than 0.

The network device sends configuration signaling to the terminal device. The i^{th} cell group may be specifically an i^{th} cell group in a configuration order, or may be specifically an i^{th} cell group in a case of arrangement in ascending order of cell group indexes. Alternatively, the i^{th} cell group may be determined in an order opposite to the foregoing order, that is, the i^{th} cell group is determined in a reverse order of a configuration order or in descending order of cell group indexes.

In this embodiment, for a case in which the first cell is a single-beam cell, the second cell is a multi-beam cell, the first cell belongs to only the first cell group, the second cell also belongs to the at least one other cell group, and each of the other cell group to which the second cell belongs corresponds to one beam, a solution for indicating a common beam of the second cell is proposed, to resolve a problem in a related technology that a common beam cannot be indicated in a form of a cell group in this case.

In a possible design, in a third implementation of the first aspect of embodiments of this application,
if the first cell is a multi-beam cell, the second cell is a single-beam cell or a multi-beam cell, the first cell belongs to N cell groups, the second cell belongs to only the first cell group, and N is an integer greater than 1,
the first beam includes N beams.

The second beam is one of the N beams, and the third beam is the second beam.

When the first cell belongs to the N cell groups, it may be specified that a quantity of beams indicated in the reference cell is equal to a quantity of cell groups to which the reference cell belongs. In other words, the first cell is a multi-beam cell, and as the reference cell, the first cell may indicate the N beams. Therefore, the first beam includes the N beams. Because the first cell indicates the N beams and belongs to the N cell groups, one of the N beams is allocated to each cell group to which the first cell belongs, and the second beam is one of the N beams. When the second beam includes only one beam, and the second cell belongs to only the first cell group, regardless of whether the second cell is a single-beam cell or a multi-beam cell, the third beam is the second beam, that is, the third beam also includes only one beam. In other words, the second cell uses one of the N beams indicated via the first cell as a common beam of the second cell.

Optionally, if the first cell group is an i^{th} cell group in the N cell groups to which the first cell belongs, and i is an integer greater than 0 and not greater than N, that the second beam is one of the N beams specifically includes: The second beam is an i^{th} beam in the N beams.

It may be understood that a plurality of beams indicated in the reference cell are in a one-to-one correspondence with a plurality of cell groups to which the reference cell belongs. In this case, a 1^{st} beam in the N beams corresponds to a 1^{st} cell group in the N cell groups, a 2^{nd} common beam in the N beams corresponds to a 2^{nd} cell group in the N cell groups, ..., and an N^{th} beam in the N beams corresponds to an N^{th} cell group in the N cell groups.

In this embodiment, for a case in which the first cell is a multi-beam cell, the second cell is a single-beam cell or a multi-beam cell, the first cell belongs to a plurality of cell groups, and the second cell belongs to only the first cell group, a solution for indicating the common beam of the second cell is proposed, to resolve a problem in a related technology that a common beam cannot be indicated in a form of a cell group in this case.

In a possible design, in a fourth implementation of the first aspect of embodiments of this application,
if the first cell is a multi-beam cell, the second cell is a multi-beam cell, the first cell belongs to N cell groups, the second cell also belongs to at least one other cell group, each of the other cell group to which the second cell belongs corresponds to one beam, and N is an integer greater than 1,
the first beam includes N beams.

The second beam is one of the N beams.

The third beam includes the second beam and the beam corresponding to each of the other cell group.

When the first cell belongs to the N cell groups, and the first beam includes the N beams, as described in the third implementation, one of the N beams is allocated to each cell group to which the first cell belongs, and the second beam is one of the N beams. When the second beam includes only one beam, because the second cell also belongs to the other cell group, and each of the other cell group to which the second cell belongs corresponds to one beam, the third beam corresponding to the second cell includes the second beam and the beam corresponding to each of the other cell group. In other words, the second cell uses common beams of a plurality of cell groups as common beams of the cell.

Optionally, if the first cell group is an i^{th} cell group in the N cell groups to which the first cell belongs, and i is an integer greater than 0 and not greater than N, that the second beam is one of the N beams specifically includes: The second beam is an i^{th} beam in the N beams.

It may be understood that this step is consistent with the optional solution in the third implementation, and details are not described herein again.

Optionally, that the third beam includes the second beam and the beam corresponding to each of the other cell group specifically includes:
using, in a grouping order of the first cell group and each of the other cell group in the cell grouping information, a beam corresponding to an i^{th} cell group in the first cell group and the other cell group as an i^{th} beam in the third beam, where i is an integer greater than 0.

The network device sends configuration signaling to the terminal device. The i^{th} cell group may be specifically an i^{th} cell group in a configuration order, or may be specifically an i^{th} cell group in a case of arrangement in ascending order of cell group indexes. Alternatively, the i^{th} cell group may be determined in an order opposite to the foregoing order, that is, the i^{th} cell group is determined in a reverse order of a configuration order or in descending order of cell group indexes.

In this embodiment, for a case in which the first cell is a multi-beam cell, the second cell is a multi-beam cell, the first cell belongs to the N cell groups, the second cell also belongs to the at least one other cell group, and each of the other cell group to which the second cell belongs corresponds to one beam, a solution for indicating a common beam of the second cell is proposed, to resolve a problem in a related technology that a common beam cannot be indicated in a form of a cell group in this case.

In a possible design, in a fifth implementation of the first aspect of embodiments of this application,
if the first cell is a multi-beam cell, and both the first cell and the second cell belong to only the first cell group,
that is, the first beam includes N beams, and N is an integer greater than 1,
the second beam is the first beam.

The third beam is a beam in the second beam.

When the first cell is a multi-beam cell, as the reference cell, the first cell may indicate the N beams. Therefore, the first beam includes the N beams. Because the first cell belongs to only the first cell group, and the second beam is used as a common beam of the first cell group, the second beam is the first beam, that is, also includes N beams. Because the second cell belongs to only the first cell group, the second cell selects one of the N beams as a common beam of the cell, that is, the third beam is a beam in the second beam.

In this embodiment, for a case in which the first cell is a multi-beam cell, and both the first cell and the second cell belong to only the first cell group, a solution for indicating a common beam of the second cell is proposed, to resolve a problem in a related technology that a common beam cannot be indicated in a form of a cell group in this case.

In a possible design, in a sixth implementation of the first aspect of embodiments of this application,
if the first cell is a multi-beam cell, and both the first cell and the second cell belong to only the first cell group,
that is, the first beam includes N beams, and N is an integer greater than 1,
the second beam is the first beam.

The third beam is the second beam.

When the first cell is a multi-beam cell, as the reference cell, the first cell may indicate the N beams. Therefore, the first beam includes the N beams. Because the first cell belongs to only the first cell group, and the second beam is used as a common beam of the first cell group, the second beam is the first beam, that is, also includes N beams. Because the second cell belongs to only the first cell group, the second cell selects the N beams as common beams of the cell, that is, the third beam is the second beam.

In this embodiment, for a case in which the first cell is a multi-beam cell, and both the first cell and the second cell belong to only the first cell group, a solution for indicating the common beam of the second cell is proposed, to resolve a problem in a related technology that a common beam cannot be indicated in a form of a cell group in this case.

In a possible design, in a seventh implementation of the first aspect of embodiments of this application,
if the first cell is a multi-beam cell, and both the first cell and the second cell belong to only the first cell group,
that is, the first beam includes N beams, and N is an integer greater than 1,
the second beam is the first beam.

When the second cell is a single-beam cell, the third beam is a beam in the second beam.

When the second cell is a multi-beam cell, the third beam is the second beam.

When the first cell is a multi-beam cell, as the reference cell, the first cell may indicate the N beams. Therefore, the first beam includes the N beams. Because the first cell belongs to only the first cell group, and the second beam is used as a common beam of the first cell group, the second beam is the first beam, that is, also includes N beams. Because the second cell belongs to only the first cell group, when the second cell is a single-beam cell, one of the N beams is used as a common beam of the cell, that is, the third beam is a beam in the second beam. When the second cell is a multi-beam cell, the N beams are selected as common beams of the cell, that is, the third beam is the second beam.

In this embodiment, for a case in which the first cell is a multi-beam cell, and both the first cell and the second cell belong to only the first cell group, a solution for indicating the common beam of the second cell is proposed, to resolve a problem in a related technology that a common beam cannot be indicated in a form of a cell group in this case.

In a possible design, in an eighth implementation of the first aspect of embodiments of this application,
if the first cell is a multi-beam cell, and both the first cell and the second cell belong to only the first cell group,
that is, the first beam includes N beams, and N is an integer greater than 1,
when a first condition is satisfied, the second beam is one of the N beams.

The third beam is the second beam.

The first condition includes:
the first cell group includes at least one single-beam cell; and/or
the first cell group includes a cell that also belongs to another cell group.

When the first cell is a multi-beam cell, as the reference cell, the first cell may indicate the N beams. Therefore, the first beam includes the N beams. When the first condition is satisfied, one of a plurality of beams indicated in the reference cell is used for the cell group to which the reference cell belongs, that is, the second beam is one of the N beams. The first condition may be one or a combination of the following: The first cell group includes a single-beam cell; and a cell in the first cell group belongs to a plurality of cell groups. When the second beam includes only one beam, and the second cell belongs to only the first cell group, regardless of whether the second cell is a single-beam cell or a multi-beam cell, the third beam is the second beam, that is, the third beam also includes only one beam. In other words, the second cell uses one of the N beams indicated via the first cell as a common beam of the second cell.

It may be understood that when the first condition is not satisfied, the second beam is the first beam, that is, the second beam includes N beams. In this case, selection logic for the third beam matches the fifth to the eighth implementations based on a type of the second cell. Details are not described herein again.

Optionally, that the second beam is one of the N beams specifically includes:
The second beam is a 1^{st} beam in the N beams.

There may be the following several methods for selecting the 1^{st} beam: 1. The network device indicates the N beams of the reference cell to the terminal device using the DCI signaling. The N beams are indicated by N transmission configuration indication (transmission configuration indication, TCI) field values in DCI. In this case, the 1^{st} beam is a beam indicated by a 1^{st} TCI field, and a 2^{nd} beam is a beam indicated by a 2^{nd} TCI field. 2. The network device sends configuration signaling to the terminal device to configure, for the terminal device, information related to a common beam. Each beam is arranged in ascending order of a configuration order, and a beam with a smallest or largest index number is used as the 1^{st} beam.

In this embodiment, for a case in which the first cell is a multi-beam cell, both the first cell and the second cell belong to only the first cell group, and the first cell group satisfies the first condition, a solution for indicating a common beam of the second cell is proposed, to resolve a problem in a related technology that a common beam cannot be indicated in a form of a cell group in this case.

In a possible design, in a ninth implementation of the first aspect of embodiments of this application,
if the first cell is a multi-beam cell, the first cell belongs to only the first cell group, the second cell also belongs to at least one other cell group, and each of the other cell group corresponds to one beam,
that is, the first beam includes N beams, and N is an integer greater than 1,
when a first condition is satisfied, the second beam is one of the N beams.

The third beam includes the second beam and the beam corresponding to each of the other cell group.

The first condition includes:
the first cell group includes at least one single-beam cell; and/or
the first cell group includes a cell that also belongs to another cell group.

When the first cell is a multi-beam cell, as the reference cell, the first cell may indicate the N beams. Therefore, the first beam includes the N beams. When the first condition is satisfied, one of a plurality of beams indicated in the reference cell is used for the cell group to which the reference cell belongs, that is, the second beam is one of the N beams. The first condition may be one or a combination of the following: The first cell group includes a single-beam cell; and a cell in the first cell group belongs to a plurality of cell groups. When the second beam includes only one beam, because the second cell also belongs to the other cell group, and each of the other cell group to which the second cell belongs corresponds to one beam, the third beam corresponding to the second cell includes the second beam and the beam corresponding to each of the other cell group. In other words, the second cell uses common beams of a plurality of cell groups as common beams of the cell.

It may be understood that when the first condition is not satisfied, the second beam is the first beam, that is, the second beam includes N beams. In this case, selection logic for the third beam matches the fifth to the eighth implementations based on a type of the second cell. Details are not described herein again.

Optionally, that the second beam is one of the N beams specifically includes:
The second beam is a 1^{st} beam in the N beams.

Selection of the 1^{st} beam is consistent with that in the eighth implementation, and details are not described herein again.

Optionally, that the third beam includes the second beam and the beam corresponding to each of the other cell group specifically includes:
using, in a grouping order of the first cell group and each of the other cell group in the cell grouping information, a beam corresponding to an i^{th} cell group in the first cell group and the other cell group as an i^{th} beam in the third beam, where i is an integer greater than 0.

The network device sends configuration signaling to the terminal device. The i^{th} cell group may be specifically an i^{th} cell group in a configuration order, or may be specifically an i^{th} cell group in a case of arrangement in ascending order of cell group indexes. Alternatively, the i^{th} cell group may be determined in an order opposite to the foregoing order, that is, the i^{th} cell group is determined in a reverse order of a configuration order or in descending order of cell group indexes.

In this embodiment, for a case in which the first cell is a multi-beam cell, the first cell belongs to only the first cell group, the first cell group satisfies the first condition, the second cell also belongs to the at least one other cell group, and each of the other cell group corresponds to one beam, a solution for indicating the common beam of the second cell is proposed, to resolve a problem in a related technology that a common beam cannot be indicated in a form of a cell group in this case.

In a possible design, in the first to the ninth implementations of the first aspect of embodiments of this application,
the configuration information is further used to configure the cell or cell group to satisfy one of constraint rules, and the constraint rules include:
a cell in each cell group belongs to only a single cell group;
when there are a plurality of cells that belong to a plurality of cell groups in the cell group, the first cell is a cell that belongs to a plurality of cell groups;
when there are a plurality of cells that belong to a plurality of cell groups in the cell group, the plurality of cells that belong to a plurality of cell groups all belong to a same cell group; and
a plurality of cells that belong to a plurality of cell groups belong to totally different cell groups.

To simplify beam indication logic, it may be specified that a multi-beam cell cannot be used as the reference cell, and only a single-beam cell can be used as the reference cell. In other words, a plurality of beams cannot be indicated in the reference cell, and only one common beam of a same type can be indicated. In extension, any one or more of the following constraints may be further used to reduce possible cases:
a single-beam cell and a multi-beam cell cannot belong to a same cell group;
if a single-beam cell and a multi-beam cell are configured in a same cell group, only the single-beam cell can be used as a reference cell;
if a single-beam cell and a multi-beam cell are configured in a same cell group, only the multi-beam cell can be used as a reference cell;
a cell cannot belong to a plurality of cell groups;
if a cell belongs to a plurality of cell groups, the cell cannot be used as a reference cell, that is, only a cell that belongs to only a single cell group can be used as a reference cell;
if a cell group includes a cell that belongs to a plurality of cell groups, only the cell that belongs to a plurality of cell groups can be used as a reference cell;
if there are a plurality of cells that belong to a plurality of cell groups, for any two such cells, cell groups to which the two cells belong are either totally the same or totally different, that is, cannot be partially the same;
when a multi-beam cell belongs to a single cell group, the multi-beam cell cannot be used as a reference cell; and
when a multi-beam cell belongs to a single cell group, if the first condition is satisfied, the multi-beam cell cannot be used as a reference cell.

In a possible design, in the first to the ninth implementations of the first aspect of embodiments of this application, after the terminal device determines the third beam based on the second beam, the method further includes:
the terminal device determines a target beam based on the third beam; and
the terminal device transmits data with the network device using the target beam.

After indicating the common beam to the terminal device via the reference cell, the network device determines, in the foregoing several implementations, how the common beam is used for all cells in the cell group to which the reference cell belongs. The terminal device processes common beam indication information via a processor of the terminal device, determines, based on the cell grouping status, a common beam corresponding to each cell, and then records, via a memory of the terminal device, common beam information corresponding to each cell, for subsequent transmission.

According to a second aspect, an embodiment of this application provides a cell beam indication method, including:
a network device sends configuration information to a terminal device, where the configuration information is used to configure at least one cell group, and each cell group includes a first cell and a second cell;
the network device indicates a first beam to the terminal device via a first cell in a first cell group, where the first beam is used by the terminal device to determine a second beam corresponding to the first cell group, the second beam is used by the terminal device to determine a third beam of a second cell in the first cell group, and the first cell group includes at least one multi-beam cell;
the network device determines the second beam based on the first beam; and
the network device determines the third beam based on the second beam.

In this embodiment, the terminal device first receives the configuration information sent by the network device, to obtain a cell grouping status, where a cell group set in cell grouping information includes at least one cell group that includes a multi-beam cell. Then, the terminal device receives a common beam indication sent by the network device via the reference cell, to determine a common beam used by a reference cell. Next, the terminal device and the network device determine, based on the common beam used by the reference cell, a common beam of a cell group in which the reference cell is located. Finally, the terminal device and the network device determine a common beam of another cell in the group based on the common beam of the cell group. Because there is the multi-beam cell in the cell group, it means that the reference cell and/or the another cell in the cell group may be multi-beam cells, and the reference cell and/or the another cell in the cell group may transmit data using at least two common beams based on a cell type of the reference cell and/or a cell type of the another cell in the cell group. Therefore, beam indication signaling overheads are reduced, and a problem that a common beam cannot be indicated for a multi-beam cell in a form of a cell group is resolved.

In a possible design, in a first implementation of the second aspect of embodiments of this application,
if the first cell is a single-beam cell, the second cell is a multi-beam cell, and the second cell belongs to only the first cell group,
that is, the first beam includes only one beam,
the second beam is the first beam, and the third beam is the second beam.

In this embodiment, for a case in which the first cell is a single-beam cell, the second cell is a multi-beam cell, and the first cell and the second cell belong to only the first cell group, a solution for indicating a common beam of the second cell is proposed, to resolve a problem in a related technology that a common beam cannot be indicated in a form of a cell group in this case.

In a possible design, in a second implementation of the second aspect of embodiments of this application,
if the first cell is a single-beam cell, the second cell is a multi-beam cell, the second cell also belongs to at least one other cell group, and each of the other cell group to which the second cell belongs corresponds to one beam,
that is, the first beam includes only one beam,
the second beam is the first beam.

The third beam includes the second beam and the beam corresponding to each of the other cell group.

Optionally, that the third beam includes the second beam and the beam corresponding to each of the other cell group specifically includes:
using, in a grouping order of the first cell group and each of the other cell group in the cell grouping information, a beam corresponding to an i^{th} cell group in the first cell group and the other cell group as an i^{th} beam in the third beam, where i is an integer greater than 0.

In this embodiment, for a case in which the first cell is a single-beam cell, the second cell is a multi-beam cell, the first cell belongs to only the first cell group, the second cell also belongs to the at least one other cell group, and each of the other cell group to which the second cell belongs corresponds to one beam, a solution for indicating a common beam of the second cell is proposed, to resolve a problem in a related technology that a common beam cannot be indicated in a form of a cell group in this case.

In a possible design, in a third implementation of the second aspect of embodiments of this application,
if the first cell is a multi-beam cell, the second cell is a single-beam cell or a multi-beam cell, the first cell belongs to N cell groups, the second cell belongs to only the first cell group, and N is an integer greater than 1,
the first beam includes N beams.

The second beam is one of the N beams, and the third beam is the second beam.

Optionally, if the first cell group is an i^{th} cell group in the N cell groups to which the first cell belongs, and i is an integer greater than 0 and not greater than N, that the second beam is one of the N beams specifically includes: The second beam is an i^{th} beam in the N beams.

In this embodiment, for a case in which the first cell is a multi-beam cell, the second cell is a single-beam cell or a multi-beam cell, the first cell belongs to a plurality of cell groups, and the second cell belongs to only the first cell group, a solution for indicating a common beam of the second cell is proposed, to resolve a problem in a related technology that a common beam cannot be indicated in a form of a cell group in this case.

In a possible design, in a fourth implementation of the second aspect of embodiments of this application,
if the first cell is a multi-beam cell, the second cell is a multi-beam cell, the first cell belongs to N cell groups, the second cell also belongs to at least one other cell group, each of the other cell group to which the second cell belongs corresponds to one beam, and N is an integer greater than 1,
the first beam includes N beams.

The second beam is one of the N beams.

The third beam includes the second beam and the beam corresponding to each of the other cell group.

Optionally, if the first cell group is an i^{th} cell group in the N cell groups to which the first cell belongs, and i is an integer greater than 0 and not greater than N, that the second beam is one of the N beams specifically includes: The second beam is an i^{th} beam in the N beams.

Optionally, that the third beam includes the second beam and the beam corresponding to each of the other cell group specifically includes:
using, in a grouping order of the first cell group and each of the other cell group in the cell grouping information, a beam corresponding to an i^{th} cell group in the first cell group and the other cell group as an i^{th} beam in the third beam, where i is an integer greater than 0.

In this embodiment, for a case in which the first cell is a multi-beam cell, the second cell is a multi-beam cell, the first cell belongs to the N cell groups, the second cell also belongs to the at least one other cell group, and each of the other cell group to which the second cell belongs corresponds to one beam, a solution for indicating a common beam of the second cell is proposed, to resolve a problem in a related technology that a common beam cannot be indicated in a form of a cell group in this case.

In a possible design, in a fifth implementation of the second aspect of embodiments of this application,
if the first cell is a multi-beam cell, and both the first cell and the second cell belong to only the first cell group,
that is, the first beam includes N beams, and N is an integer greater than 1,
the second beam is the first beam.

The third beam is a beam in the second beam.

In this embodiment, for a case in which the first cell is a multi-beam cell, and both the first cell and the second cell belong to only the first cell group, a solution for indicating a common beam of the second cell is proposed, to resolve a problem in a related technology that a common beam cannot be indicated in a form of a cell group in this case.

In a possible design, in a sixth implementation of the second aspect of embodiments of this application,
if the first cell is a multi-beam cell, and both the first cell and the second cell belong to only the first cell group,
that is, the first beam includes N beams, and N is an integer greater than 1,
the second beam is the first beam.

The third beam is the second beam.

In this embodiment, for a case in which the first cell is a multi-beam cell, and both the first cell and the second cell belong to only the first cell group, a solution for indicating a common beam of the second cell is proposed, to resolve a problem in a related technology that a common beam cannot be indicated in a form of a cell group in this case.

In a possible design, in a seventh implementation of the second aspect of embodiments of this application,
if the first cell is a multi-beam cell, and both the first cell and the second cell belong to only the first cell group,
that is, the first beam includes N beams, and N is an integer greater than 1,
the second beam is the first beam.

When the second cell is a single-beam cell, the third beam is a beam in the second beam.

When the second cell is a multi-beam cell, the third beam is the second beam.

In this embodiment, for a case in which the first cell is a multi-beam cell, and both the first cell and the second cell belong to only the first cell group, a solution for indicating a common beam of the second cell is proposed, to resolve a problem in a related technology that a common beam cannot be indicated in a form of a cell group in this case.

In a possible design, in an eighth implementation of the second aspect of embodiments of this application,
if the first cell is a multi-beam cell, and both the first cell and the second cell belong to only the first cell group,
that is, the first beam includes N beams, and N is an integer greater than 1,
when a first condition is satisfied, the second beam is one of the N beams.

The third beam is the second beam.

The first condition includes:
the first cell group includes at least one single-beam cell; and/or
the first cell group includes a cell that also belongs to another cell group.

Optionally, that the second beam is one of the N beams specifically includes:
The second beam is a 1^{st} beam in the N beams.

In this embodiment, for a case in which the first cell is a multi-beam cell, both the first cell and the second cell belong to only the first cell group, and the first cell group satisfies the first condition, a solution for indicating a common beam of the second cell is proposed, to resolve a problem in a related technology that a common beam cannot be indicated in a form of a cell group in this case.

In a possible design, in a ninth implementation of the second aspect of embodiments of this application,
if the first cell is a multi-beam cell, the first cell belongs to only the first cell group, the second cell also belongs to at least one other cell group, and each of the other cell group corresponds to one beam,
that is, the first beam includes N beams, and N is an integer greater than 1,
when a first condition is satisfied, the second beam is one of the N beams.

The third beam includes the second beam and the beam corresponding to each of the other cell group.

The first condition includes:
the first cell group includes at least one single-beam cell; and/or
the first cell group includes a cell that also belongs to another cell group.

Optionally, that the second beam is one of the N beams specifically includes:
The second beam is a 1^{st} beam in the N beams.

Optionally, that the third beam includes the second beam and the beam corresponding to each of the other cell group specifically includes:
using, in a grouping order of the first cell group and each of the other cell group in the cell grouping information, a beam corresponding to an i^{th} cell group in the first cell group and the other cell group as an i^{th} beam in the third beam, where i is an integer greater than 0.

In this embodiment, for a case in which the first cell is a multi-beam cell, the first cell belongs to only the first cell group, the first cell group satisfies the first condition, the second cell also belongs to the at least one other cell group, and each of the other cell group corresponds to one beam, a solution for indicating a common beam of the second cell is proposed, to resolve a problem in a related technology that a common beam cannot be indicated in a form of a cell group in this case.

In a possible design, in the first to the ninth implementations of the second aspect of embodiments of this application,
the configuration information is further used to configure the cell or cell group to satisfy one of constraint rules, and the constraint rules include:
a cell in each cell group belongs to only a single cell group;
when there are a plurality of cells that belong to a plurality of cell groups in the cell group, the first cell is a cell that belongs to a plurality of cell groups;
when there are a plurality of cells that belong to a plurality of cell groups in the cell group, the plurality of cells that belong to a plurality of cell groups all belong to a same cell group; and
a plurality of cells that belong to a plurality of cell groups belong to totally different cell groups.

According to a third aspect, an embodiment of this application provides a terminal device. The terminal device includes:
a transceiver module, configured to receive configuration information sent by a network device, where the configuration information is used to configure at least one cell group, and each cell group includes a first cell and a second cell; and
a processing module, configured to determine, based on a first beam indicated via a first cell in a first cell group, a second beam corresponding to the first cell group, where the first cell group includes at least one multi-beam cell; and further configured to determine, based on the second beam, a third beam of a second cell in the first cell group.

In a possible design, the transceiver module of the terminal device is further configured to: after a target beam is determined based on the third beam, transmit data with the network device using the target beam.

According to a fourth aspect, an embodiment of this application provides a network device. The network device includes:
a transceiver module, configured to send configuration information to a terminal device, where the configuration information is used to configure at least one cell group, and each cell group includes a first cell and a second cell; and
a processing module, configured to indicate a first beam to the terminal device via a first cell in a first cell group, where the first beam is used by the terminal device to determine a second beam corresponding to the first cell group, the second beam is used by the terminal device to determine a third beam of a second cell in the first cell group, and the first cell group includes at least one multi-beam cell; further configured to determine the second beam based on the first beam; and further configured to determine the third beam based on the second beam.

According to a fifth aspect, an embodiment of this application provides a communication apparatus. The communication apparatus includes a processor. The processor is configured to invoke and run a computer program stored in a memory, so that the processor implements any implementation of the first aspect or the second aspect.

Optionally, the communication apparatus further includes a transceiver. The processor is further configured to control the transceiver to send and receive a signal.

Optionally, the communication apparatus includes the memory. The memory stores the computer program.

According to a sixth aspect, an embodiment of this application provides a computer-readable storage medium. The computer-readable storage medium stores a computer program or instructions. The computer program or the instructions are used to enable, when executed by one or more computers, the one or more computers to perform the method according to any possible implementation of any one of the foregoing aspects.

According to a seventh aspect, an embodiment of this application provides a computer program product including instructions. When the computer program product is run on a computer, the computer is enabled to perform the method according to any one of the foregoing aspects.

According to an eighth aspect of this application, a chip apparatus is provided, including a processor, configured to be connected to a memory, and invoke a program stored in the memory, so that the processor implements any implementation of the first aspect or the second aspect.

According to a ninth aspect, an embodiment of this application provides a communication system. The system includes the terminal device and the network device in the foregoing aspects.

It can be learned from the foregoing technical solutions that embodiments of this application have the following advantages.

In embodiments of this application, the terminal device first receives the configuration information sent by the network device, to obtain the cell grouping status, where the cell group set in the cell grouping information includes at least one cell group that includes a multi-beam cell. Then, the terminal device receives the common beam indication sent by the network device via the reference cell, to determine the common beam used by the reference cell. Next, the terminal device and the network device determine, based on the common beam used by the reference cell, the common beam of the cell group in which the reference cell is located. Finally, the terminal device and the network device determine the common beam of the another cell in the group based on the common beam of the cell group. The solution of this application includes various possible cell grouping methods for a multi-beam cell, and a plurality of solutions for indicating a common beam by group in various grouping methods, to indicate a common beam of the multi-beam cell in a form of a cell group. Therefore, beam indication signaling overheads are reduced, and a problem that the common beam cannot be indicated for the multi-beam cell in the form of the cell group is resolved.

### BRIEF DESCRIPTION OF DRAWINGS

FIG. 1 is a diagram of a structure of a TCI-state;
FIG. 2 is a diagram of a structure of a MAC-CE used to activate a TCI;
FIG. 3 is a diagram of cell grouping of single-beam cells;
FIG. 4a is a first diagram of multi-beam cell grouping according to an embodiment of this application;
FIG. 4b is a second diagram of multi-beam cell grouping according to an embodiment of this application;
FIG. 5 is a diagram of a structure of a communication system according to an embodiment of this application;
FIG. 6 is a diagram of structures of each network device and each terminal device in a communication system;
FIG. 7 is a schematic flowchart of a cell beam indication method according to an embodiment of this application;
FIG. 8 is a diagram of a structure of a communication apparatus according to an embodiment of this application;
FIG. 9 is a diagram of a structure of another communication apparatus according to an embodiment of this application;
FIG. 10 is a diagram of a structure of a terminal device according to an embodiment of this application; and
FIG. 11 is a diagram of a structure of another communication apparatus according to an embodiment of this application.

### DESCRIPTION OF EMBODIMENTS

To make objectives, technical solutions, and advantages of this application clearer, the following describes embodiments of this application with reference to the accompanying drawings. It is clear that the described embodiments are merely some but not all of the embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover a non-exclusive inclusion. For example, a process, method, system, product, or device that includes a list of steps or modules is not necessarily limited to those expressly listed steps or modules, but may include other steps or modules not expressly listed or inherent to such a process, method, product, or device. Names or numbers of steps in this application do not mean that the steps in a method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

An embodiment of a first aspect of this application provides a cell beam indication method and a related device therefor. A network device and a terminal device may determine, based on a cell grouping status, a common beam corresponding to each cell in each cell group. In the method, a cell in a cell group may be a multi-beam cell, that is, the cell may transmit data using at least two common beams based on a cell type of the cell. Therefore, beam indication signaling overheads are reduced, and a problem that a common beam cannot be indicated for a multi-beam cell in a form of a cell group is resolved.

Abeam may be represented in a new radio (new radio, NR) protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated by a transmission configuration indication (transmission configuration indication, TCI) state (TCI-state) parameter, or by a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including a downlink (download, DL) TCI-state or an uplink (UL, Upload) TCI-state), a spatial relation, or the like. The above terms are also equivalent to each other. Alternatively, the beam may be replaced with another term for representing the beam. This is not limited in this application.

A beam used to send a signal may be referred to as a transmit beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmit beam may be indicated by a TCI-state.

A beam used to receive a signal may be referred to as a receive beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmit beam may be indicated by a spatial relation (spatial relation), an uplink TCI-state, or a sounding reference signal (sounding reference signal, SRS) resource (indicating a transmit beam using an SRS). Therefore, the uplink beam may alternatively be replaced with the SRS resource.

The transmit beam may be distribution of signal strength formed in different directions in space after a signal is transmitted via an antenna. The receive beam may be distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the network device measures different beams using different resources, the terminal device feeds back measured resource quality, and the network device knows quality of a corresponding beam. During data transmission, beam information is also indicated by a resource corresponding to the beam information. For example, the network device indicates information about a physical downlink shared channel (physical downlink shared channel, PDSCH) beam of the terminal device by a TCI field in DCI.

Different beams may be used for different channels or reference signal resources. Alternatively, a unified beam may be used for a plurality of channels and/or a plurality of reference signal resources, and the unified beam may also be referred to as a common beam. A plurality of cells may also use a same common beam. The common beam can be classified into the following types: an uplink and downlink common beam, an uplink common beam, and a downlink common beam. The uplink and downlink common beam is a beam for both uplink and downlink channels/reference signals. The uplink common beam is a beam dedicated to an uplink channel/reference signal. The uplink common beam is a beam dedicated to an uplink channel/reference signal. Unless otherwise specified, the beam in this application may be a common beam, or may be an independent beam (a beam used by each channel independently). Unless otherwise specified, the common beam in this application may also be replaced with a beam, that is, is a beam in general, and whether the common beam or an independent beam is used is not emphasized. Unless otherwise specified, the common beam in this application may be specifically any one of the foregoing three types.

Optionally, a plurality of beams having a same communication characteristic or similar communication characteristics are considered as one beam. One beam may include one or more antenna ports, configured to transmit a data channel, a control channel, a sounding signal, and the like. The one or more antenna ports forming the beam may also be considered as one antenna port set.

In embodiments of this application, unless otherwise specified, the beam is a transmit beam of the network device. During beam measurement, each beam of the network device corresponds to one resource. Therefore, an index of a resource may uniquely identify a beam corresponding to the resource.

Both the network device and the terminal device may perform communication using a specific beam. During downlink data transmission, the network device sends data to the terminal device using a specific beam, and the terminal device receives the data using a specific beam. The network device needs to notify the terminal device of information about a transmit beam used by the network device, so that the terminal device can receive, using a receive beam corresponding to the transmit beam, the data sent by the network device. During uplink transmission, the terminal device sends data to the network device using a specific transmit beam, and the network device receives the data using a specific beam. The transmit beam used by the terminal device to transmit the data to the network device is indicated by the network device. In a 3GPP protocol, the network device indicates uplink and/or downlink beam information to the terminal device by indicating a TCI-state. Specifically, the network device indicates the TCI-state to the terminal device using a transmission configuration indication (transmission configuration indication, TCI) field in downlink control information (downlink control information, DCI). A length of the TCI field is 3 bits, which can represent eight different field values (codepoints). Each value of the TCI field corresponds to a TCI-state index, and the TCI-state index may uniquely identify a TCI-state.

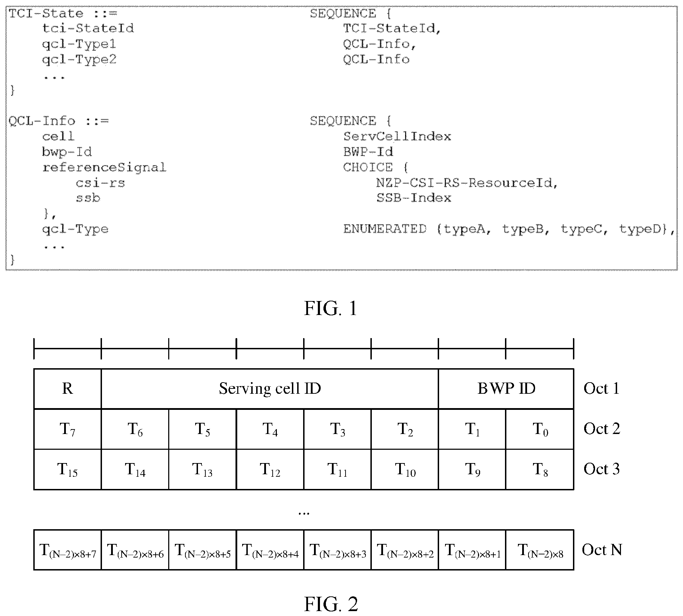

The TCI-state is configured by the network device for each terminal device. The TCI-state includes a plurality of parameters, and the terminal device may determine, using these parameters, a beam corresponding to the TCI-state. A structure of the TCI-state is shown in FIG. 1. Each TCI-state includes an index of the TCI-state, that is, TCI-StateId, and two pieces of QCL-Info. One piece of QCL-Info indicates time-frequency offset information, and the other piece of QCL-Info indicates beam information. The QCL-Info includes a QCL-Type field indicating a type of the QCL-Info. There are four QCL-types: {typeA, typeB, typeC, typeD}, where typeA, typeB, and typeC indicate the time-frequency offset information, and typeD indicates the beam information. QCL-Info of typeD includes a reference signal resource (referenceSignal) used to provide a beam direction reference for a channel or a reference signal for which the TCI-state is used. Specifically, if a TCI-state is used for transmission of a channel or a reference signal, the terminal device needs to use a beam of a reference signal resource in QCL-Info of typeD in the TCI-state as a beam for the channel or the reference signal. The beam of the reference signal resource is determined by the terminal device in advance, and is usually determined through a beam measurement process performed in advance. According to the foregoing method, the terminal device may determine, using a TCI-state corresponding to uplink or downlink transmission, a beam corresponding to the uplink or downlink transmission. For uplink transmission, the terminal device determines a terminal transmit beam corresponding to the uplink transmission, that is, an uplink transmit beam. For downlink transmission, the terminal device determines a terminal receive beam corresponding to the downlink transmission, that is, a downlink receive beam. Each piece of QCL-Info further includes a cell field and a BWP-ID that respectively indicate a cell and a bandwidth part (bandwidth Part, BWP) to which a reference signal resource in the QCL-Info belongs.

The following uses an example to describe in detail how the network device indicates receive beam information of a data transmission beam to the terminal device using the TCI-state based on an R15/R16 protocol. This includes TCI-state configuration, activation, and indication.

TCI-state configuration: The network device configures a plurality of TCI-states for the terminal device using resource control (radio resource control, RRC) signaling. Each of these TCI-states includes a piece of QCL-Info of typeD. Alternatively, the network device may configure a TCI-state that does not include QCL-info of typeD. However, the TCI-states do not indicate the data transmission beam. Therefore, details are not further described herein.

TCI-state activation: After configuring the plurality of TCI-states, the network device further needs to activate eight of the TCI-states using a medium access control-control element (medium access control-control element, MAC-CE). The eight TCI-states are in a one-to-one correspondence with eight values of the TCI field in the DCI. In other words, the eight TCI-states corresponding to the eight values of the TCI field in the DCI are determined using MAC-CE signaling. A structure of the MAC-CE used to activate a TCI is shown in FIG. 2. Fields T0 to T(N-2)x8+7 respectively correspond to TCI-states whose indexes are 0 to (N-2)×8+7 and that are configured in the first step, a size of each field is 1 bit, and a value may be 0 or 1. The value 1 indicates that the TCI-state is activated, and the value 0 indicates that the TCI-state is not activated. Theoretically, each MAC-CE may have eight activation fields whose values are 1, and the others are all 0. TCI-states corresponding to the eight fields whose values are 1 are the eight TCI-states corresponding to the eight values of the TCI field in the DCI. For example, a smallest value 000 of the TCI field corresponds to an activated TCI-state with a smallest index in the MAC-CE. The rest may be deduced by analogy in one-to-one correspondence. There are many types of MAC-CEs. In addition to the MAC-CE used to activate a TCI-state, there are many MAC-CEs for other purposes. This application relates only to a MAC-CE used to activate a TCI-state/TCI-state combination. Therefore, unless otherwise specified, the MAC-CE in this application is such a MAC-CE.

The network device indicates a specific TCI-state using the TCI field in the DCI. For example, a value of the TCI field in the DCI sent by the network device to the terminal device is 000, indicating that a TCI-state corresponding to 000 is used for the data transmission beam. A reference signal included in QCL-Info of typeD in the TCI-state is a channel state information-reference signal (Channel State Information-Reference Signal, CSI-RS) whose index is #1, indicating that a beam for data transmission is the same as a receive beam corresponding to the CSI-RS whose index is #1. The receive beam corresponding to the CSI-RS whose index is #1 may be determined through a beam measurement procedure, and is known to the terminal device. Therefore, the terminal device may determine, based on a specific value of the TCI field, a receive beam corresponding to the data transmission beam, to receive data using the corresponding receive beam.

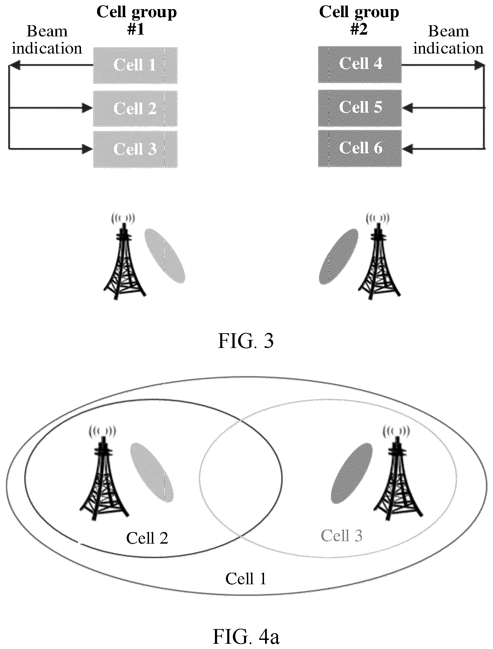

In a related technology, the network device configures a plurality of cells that use a same beam in one cell group, and then indicates a common beam in a reference cell using DCI signaling. The common beam is directly used for all the cells in the cell group. As shown in FIG. 3, cells on each base station are configured as a cell group, and share a common beam. In a cell group #1 and a cell group #2, common beams are respectively indicated via reference cells (a cell 1 and a cell 4), and the indicated common beams are respectively used for all cells in the cell groups in which the reference cells are located.

In the foregoing beam indication method, only a single-beam cell can be configured as a cell group to perform unified indication of a common beam. However, for a multi-beam cell, how to perform unified indication of a common beam in a form of a cell group is not involved in the related technology. For example, in a scenario shown in FIG. 4a, one cell may be deployed on one base station (for example, a cell 2 and a cell 3 in FIG. 4a), or may be deployed on a plurality of base stations (for example, a cell 1 in FIG. 4a). How to indicate a plurality of common beams of the cell 1 through cell grouping cannot be resolved in the related technology.

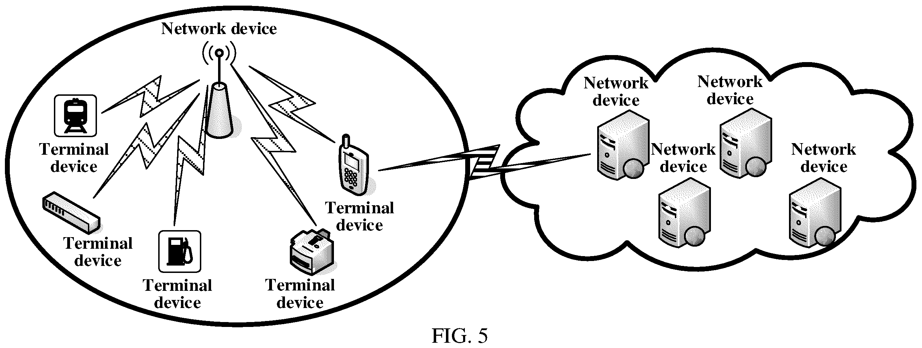

To resolve the foregoing problem, an embodiment of this application provides an optimal cell selection method. The method may be implemented by a system shown in FIG. 5 (FIG. 5 is a diagram of a structure of a communication system according to an embodiment of this application), including a plurality of network devices and a plurality of terminal devices. A single network device may transmit data or control signaling to a plurality of terminal devices, or a plurality of network devices may simultaneously transmit data or control signaling to a single terminal device. The following separately gives descriptions.

The technical solution in this embodiment of this application may be applied to various communication systems, for example, a global system for mobile communications mobile communications (global system of mobile communications, GSM) system, a code division multiple access (code division multiple access, CDMA) system, a wideband code division multiple access (wideband code division multiple access, WCDMA) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G communication system, and a future wireless communication system.

In this embodiment of this application, the network device is an apparatus deployed in a radio access network to provide a wireless communication function for the terminal device. The network device may include various forms of macro base stations, micro base stations (also referred to as small stations), relay stations, access points, and the like. The network device may be a device that communicates with the terminal device through an air interface and that is in an access network, or a network device in a vehicle-to-everything (vehicle-to-everything, V2X) technology is a roadside unit (roadside unit, RSU). The base station may be configured to perform conversion between a received over-the-air frame and an internet protocol (internet protocol, IP) packet, and serves as a router between the terminal device and other parts of the access network, where the other parts of the access network may include an IP network. The RSU may be a fixed infrastructure entity supporting application of the V2X, and may exchange a message with another entity supporting application of the V2X. The network device may further coordinate attribute management of the air interface. The network device may have different names in systems that use different radio access technologies, for example, a base transceiver station (base transceiver station, BTS) in the global system for mobile communications (global system for mobile communications, GSM) or a code division multiple access (code division multiple access, CDMA) network, a base station (NodeB, NB) in wideband code division multiple access (wideband code division multiple access, WCDMA), and an eNB or eNodeB (evolved NodeB) in long term evolution (long term evolution, LTE). Alternatively, the network device may be a radio controller in a cloud radio access network (cloud radio access network, CRAN) scenario. Alternatively, the network device may be a base station device in a future 5G network or a network device in a future evolved public land mobile network (public land mobile network, PLMN). Alternatively, the network device may be a wearable device or an in-vehicle device. Alternatively, the network device may be a transmission and reception point (transmission and reception point, TRP). Alternatively, the network device may include a core network device, and the core network device includes, for example, an access and mobility management function (access and mobility management function, AMF). It should be noted that the RSU may be a network RSU, or may be a terminal device RSU. When the RSU is used as a network RSU, the RSU performs a function of the network device. When the RSU is used as a terminal device RSU, the RSU performs a function of the terminal device.

In this embodiment of this application, the terminal device includes a device that provides voice for a user, a device that provides data connectivity for the user, and a device that provides voice and data connectivity for the user. It may be understood that the terminal device may include various handheld devices, in-vehicle devices, wearable devices, or computing devices that have a wireless communication function, or other processing devices connected to a wireless modem. The device may communicate with a core network through a radio access network (radio access network, RAN), and exchange voice or data with the RAN, or exchange voice and data with the RAN. It should be noted that the terminal device is represented in a plurality of manners. For example, the terminal device may include user equipment (user equipment, UE), a wireless terminal, a mobile terminal, a device-to-device (device-to-device, D2D) terminal, a vehicle-to-everything (vehicle-to-everything, V2X) terminal (an in-vehicle terminal, for example, an on-board unit (on-board unit, OBU)), a roadside unit (roadside unit, RSU), a machine-to-machine/machine type communication (machine-to-machine/machine type communications, M2M/MTC) terminal, and an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), or a user device (user device). For another example, the terminal device may include a mobile phone (or referred to as a "cellular" phone), a computer with a mobile terminal, or a portable, pocket-sized, handheld, or computer built-in mobile apparatus. For another example, the terminal device may include a personal communication service (personal communication service, PCS) phone, a cordless phone, a session initiation protocol (session initiation protocol, SIP) phone, a wireless local loop (wireless local loop, WLL) station, a cellular phone (cellular phone), a smartphone (smartphone), a wireless data card, a personal digital assistant (personal digital assistant, PDA), a tablet computer, a wireless modem (modem), a handheld device (handset), a laptop computer (laptop computer), and a machine type communication (machine type communication, MTC) terminal. For another example, the terminal device may include a limited device, for example, a device with low power consumption, a device with a limited storage capability, or a device with a limited computing capability. For another example, the terminal device may include an information sensing device such as a barcode, radio frequency identification (radio frequency identification, RFID), a sensor, a global positioning system (global positioning system, GPS), or a laser scanner. For another example, the terminal device may alternatively include a wearable device, an uncrewed aerial vehicle, an uncrewed ground vehicle, and a shipborne terminal. The wearable device may also be referred to as a wearable intelligent device, an intelligent wearable device, or the like, and is a general term of wearable devices that are intelligently designed and developed for daily wear using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or a part of functions without depending on a smartphone, for example, a smartwatch or smart glasses, and includes a device that is dedicated to only one type of application function and needs to collaboratively work with another device such as a smartphone, for example, various smart bands, smart helmets, or smart jewelry for monitoring physical signs.

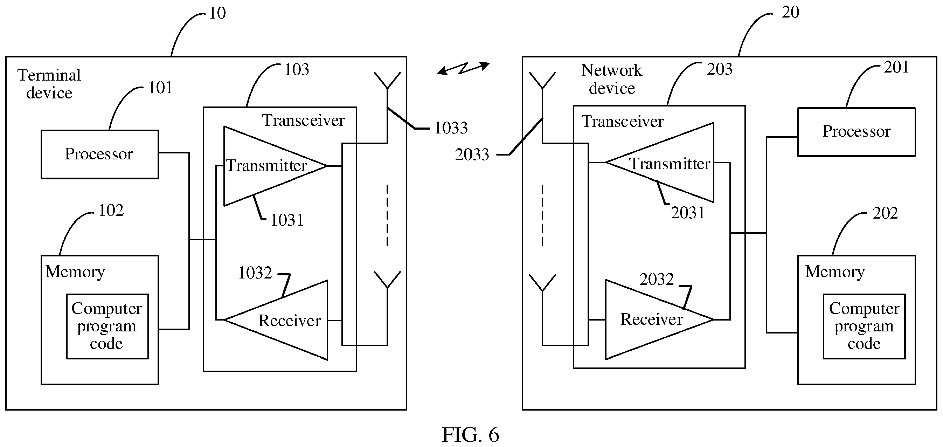

In the communication system, communication between each network device and each terminal device may be alternatively represented in another form. For example, as shown in FIG. 6, a terminal device 10 includes a processor 101, a memory 102, and a transceiver 103, and the transceiver 103 includes a transmitter 1031, a receiver 1032, and an antenna 1033. A network device 20 includes a processor 201, a memory 202, and a transceiver 203, and the transceiver 203 includes a transmitter 2031, a receiver 2032, and an antenna 2033. The receiver 1032 may be configured to receive transmission control information via the antenna 1033, and the transmitter 1031 may be configured to send transmission feedback information to the network device 20 via the antenna 1033. The transmitter 2031 may be configured to send the transmission control information to the terminal device 10 via the antenna 2033, and the receiver 2032 may be configured to receive, via the antenna 2033, the transmission feedback information sent by the terminal device 10.

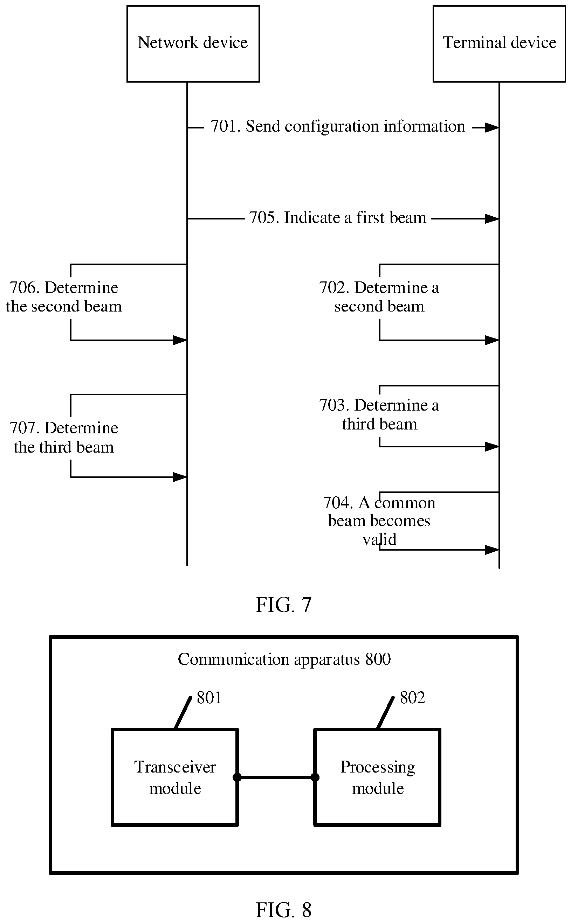

The following describes in detail the cell handover method provided in this embodiment of this application. FIG. 7 is a schematic flowchart of the cell beam indication method according to an embodiment of this application. The method includes the following steps.

701: The terminal device receives configuration information sent by the network device, where the configuration information is used to configure at least one cell group, and each cell group includes a first cell and a second cell.

It may be understood that after grouping cells based on types of the cells, the network device sends a radio resource control (radio resource control, RRC) configuration instruction to the terminal device to configure, for the terminal device, information related to a common beam, for example, cell grouping information, a common beam set, and a common beam type.

The configuration information specifically includes the cell grouping information, and the cell grouping information is used to configure the at least one cell group. In other words, the cell grouping information is used to notify the terminal device of cells that are grouped into a group for which a unified beam indication may be performed. The cells may be grouped by the following several methods.
(1) Group cells corresponding to a same base station into a cell group.
   As shown in FIG. 4a, the cell 1 and the cell 2 are deployed on a same base station, so that the cell 1 and the cell 2 are grouped into a group; and the cell 1 and the cell 3 are also deployed on a same base station, so that the cell 1 and the cell 3 are also grouped into a group. In other words, the cell 1 belongs to both a cell group #1 and a cell group #2. In this grouping manner, one cell may belong to a plurality of cell groups.
(2) Group cells corresponding to a totally same base station into a cell group.

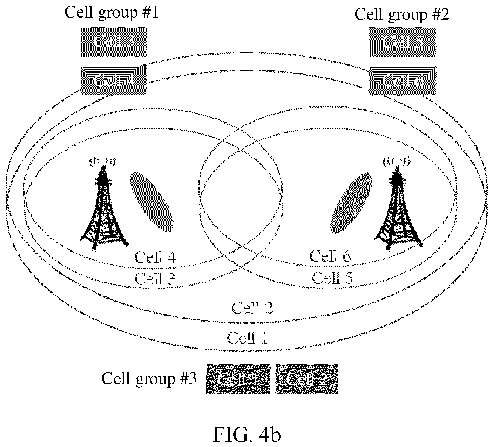

As shown in FIG. 4b, single-beam cells (a cell 3 and a cell 4) deployed only on a first base station are grouped into a cell group #1; single-beam cells (a cell 5 and a cell 6) deployed only on a second base station are grouped into a cell group #2; and multi-beam cells (a cell 1 and a cell 2) deployed on both the first base station and the second base station are grouped into a cell group #3. In this grouping manner, one cell belongs to only one cell group, and cannot belong to a plurality of cell groups. In other words, a single-beam cell can be grouped into a group with only a single-beam cell, and a multi-beam cell can be grouped into a group with only a multi-beam cell.

It may be understood that each cell group includes a reference cell and a non-reference cell. In this embodiment of this application, the first cell represents a reference cell, and the second cell represents a non-reference cell. In a cell group, there is only one reference cell, that is, each cell group includes only one first cell; and a quantity of non-reference cells is not limited, that is, each cell group includes a plurality of second cells.

702: The terminal device determines, based on a first beam indicated via a first cell in a first cell group, a second beam corresponding to the first cell group. Optionally, the first cell group includes at least one multi-beam cell.

It should be noted that after receiving the configuration information, the terminal device further needs to receive the first beam indicated by the network device using signaling in the first cell in the first cell group. For a cell group, the network device needs to indicate a common beam only in one cell in the cell group, and then determine a common beam of the cell group based on the common beam. After the common beam of the cell group is determined, a common beam of another cell in the cell group is determined based on the common beam of the cell group. A cell whose common beam is directly indicated by the network device is referred to as a reference cell, that is, the first cell in this embodiment of this application.

Therefore, the first beam indicated via the first cell in the first cell group is a common beam corresponding to the reference cell. The second beam corresponding to the first cell group is determined based on the first beam, where the second beam represents a common beam corresponding to the cell group.

Further, the configuration information further includes the common beam set and the common beam type.

The network device sends DCI signaling to the terminal device via a reference cell in the cell group, to indicate a common beam of the reference cell, where the indicated common beam is a common beam in the common beam set configured in the configuration information. Alternatively, the common beam may be indicated by MAC-CE (Medium access control-control element, medium access control-control element) signaling and DCI signaling. To be specific, the network device first sends the MAC-CE signaling to the terminal device to indicate a common beam subset (the common beam subset is a subset of the common beam set configured in the configuration information), and then sends the DCI signaling to the terminal device to indicate the common beam (the common beam is a common beam in the common beam subset). The network device sends the configuration information via a transmitter of the network device, and the terminal device receives the configuration information via a receiver of the terminal device. The network device sends beam indication information via the transmitter (the transmitter 2031 in FIG. 6) of the network device, and the terminal device receives the beam indication information via the receiver (the receiver 1032 in FIG. 6) of the terminal device.

It should be noted that the common beam is classified into two types: an uplink and downlink j oint common beam and an uplink and downlink independent common beam. The uplink and downlink joint common beam is a beam for both an uplink channel/reference signal and a downlink channel/reference signal. The network device indicates an uplink and downlink joint common beam to the terminal device, and the terminal device may send an uplink channel/reference signal using the uplink and downlink joint common beam, and may also receive a downlink channel/reference signal using the uplink and downlink joint common beam. The uplink and downlink joint common beam is generally used in a scenario in which the terminal device has beam reciprocity, that is, a scenario in which a downlink receive beam and an uplink transmit beam of the terminal device face a same direction. The uplink and downlink independent common beam is a beam that can be used only for an uplink channel/reference signal or a downlink channel/reference signal. The network device needs to indicate two common beams to the terminal device: an uplink common beam for uplink channel/reference signal transmission and a downlink common beam for downlink channel/reference signal transmission. The uplink and downlink independent common beam is generally used in a scenario in which the terminal device does not have beam reciprocity, that is, a scenario in which a downlink receive beam and an uplink transmit beam of the terminal device face different directions. The common beam is referred to as a beam for short. Unless otherwise specified, the beam in this application is a common beam. In this application, a single common beam of a same type may be specifically a single uplink and downlink joint common beam, a single uplink common beam, and/or a single downlink common beam.

The first cell group includes the at least one multi-beam cell, that is, the first cell and/or a second cell in the first cell group are/is multi-beam cells. In subsequent embodiments, discussion is separately performed based on cell types of the first cell and the second cell.

For ease of description, concepts of a single-beam cell and a multi-beam cell are extended below. The single-beam cell is a cell that uses a single common beam of a same type. The foregoing type is a type of the common beam, including the uplink and downlink joint common beam, the uplink common beam, the downlink common beam, and the like. For example, in an uplink and downlink joint common beam mode, a cell that uses only a single uplink and downlink joint common beam is a single-beam cell. In an uplink and downlink independent common beam mode, a cell that uses a single downlink common beam and a single uplink common beam is also a single-beam cell. The multi-beam cell is a cell that uses a plurality of common beams of a same type. For example, in the uplink and downlink joint common beam mode, a cell that uses a plurality of uplink and downlink joint common beams is a multi-beam cell. In the uplink and downlink independent common beam mode, a cell that uses a plurality of downlink common beams and a plurality of uplink common beams is a multi-beam cell.

The single-beam cell and the multi-beam cell may be distinguished based on configuration information. For example, configuration information of a cell includes a parameter that indicates whether the cell is a single-beam cell or a multi-beam cell. Alternatively, the single-beam cell and the multi-beam cell may be determined based on a quantity of common beam sets of a same type configured in the cell. For example, if configuration information of a cell includes a single common beam set of a same type, it indicates that the cell is a single-beam cell; or if configuration information of a cell includes a plurality of common beam sets of a same type, it indicates that the cell is a multi-beam cell. It should be noted that a common beam in a cell is either an uplink and downlink joint common beam or an uplink and downlink independent common beam. Generally, a case in which both an uplink and downlink joint common beam and an uplink and downlink independent common beam are used does not exist, that is, only one type of common beam is used in a cell. Therefore, unless otherwise specified, the common beam in the following represents a same type of common beam.

Alternatively, whether a cell is a single-beam cell or a multi-beam cell may be indicated by a MAC-CE or DCI signaling.

In an implementation method, the network device may send, to the terminal device, two types of MAC-CEs for common beam activation, including a first MAC-CE and a second MAC-CE. In the first MAC-CE, one TCI field value may correspond to one or more types of common beams, but a quantity of corresponding common beams of a same type is 1. For example, one TCI field value may correspond to one uplink and downlink joint common beam, or correspond to one uplink common beam and/or one downlink common beam. In the second MAC-CE, a quantity of common beams of a same type corresponding to one TCI field value may be 1 or 2. For example, one TCI field value may correspond to one or two uplink and downlink joint common beams, or correspond to one or two uplink common beams and/or one or two downlink common beams.

The network device may send the first MAC-CE or the second MAC-CE in a cell.

In an implementation, if the network device sends the first MAC-CE in a cell, a type of the cell changes to a single-beam cell; or if the network device sends the second MAC-CE in a cell, a type of the cell changes to a multi-beam cell.

In another implementation, the network device sends the second MAC-CE in a cell. If a quantity of common beams of a same type corresponding to each TCI field value in the second MAC-CE is 1, a type of the cell changes to a single-beam cell; or if a quantity of common beams of a same type corresponding to at least one TCI field value in the second MAC-CE is 2, a type of the cell changes to a multi-beam cell.

It should be noted that step 702 is intended to determine a common beam of a cell group based on a common beam indicated in a reference cell. For example, when the reference cell is a multi-beam cell, and a plurality of common beams of a same type (a plurality of uplink and downlink joint common beams, or a combination of a plurality of uplink common beams and a plurality of downlink common beams) are indicated, there are specifically the following several cases for whether the plurality of common beams are all used for one cell group or are separately used for a plurality of cell groups.

Case 1: If the first cell is a single-beam cell, that is, the first beam includes only one beam, the second beam is one first beam.

In other words, a single common beam of a same type is indicated in the reference cell. For example, a single uplink and downlink joint common beam is indicated, or a single uplink common beam and a single downlink common beam are indicated. In other words, the reference cell is a single-beam cell. In this case, the terminal device uses the single common beam as a common beam corresponding to the cell group to which the reference cell belongs. It may be specified that a single-beam cell can belong to only one cell group, and cannot belong to a plurality of cell groups.

Case 2: If the first cell is a multi-beam cell, that is, the first beam includes N beams, and N is an integer greater than 1,
a plurality of common beams of a same type are indicated in the reference cell, in other words, the reference cell is a multi-beam cell, and in this case, there may further be the following cases.

Case 2.1: If the first cell belongs to N cell groups, a second beam corresponding to each of the N cell groups includes only a single beam, and the single beam is one of the N beams. In other words, if a cell belongs to N cell groups, or a cell is used as reference cells in N cell groups, and N common beams of a same type are indicated in the cell, the N common beams of the same type are respectively used as beams corresponding to the N cell groups.

For example, in FIG. 4a, the cell 1 belongs to both the cell group #1 and the cell group #2. In this case, if two common beams of a same type are indicated in the reference cell, the two common beams are respectively used as common beams corresponding to the two cell groups to which the reference cell belongs.

It may be specified that when a cell belongs to N cell groups, or when a cell serves as reference cells in a plurality of cell groups, a quantity of common beams of a same type that are indicated in the cell is equal to a quantity of cell groups to which the cell belongs. In other words, a quantity of common beams of a same type that are indicated in the reference cell is equal to a quantity of cell groups to which the reference cell belongs. A plurality of common beams of a same type that are indicated in the reference cell are in a one-to-one correspondence with a plurality of cell groups to which the reference cell belongs.

Optionally, if the first cell group is an i^{th} cell group in the N cell groups to which the first cell belongs, and i is an integer greater than 0 and not greater than N, that the second beam is one of the N beams specifically includes: The second beam is an i^{th} beam in the N beams.

Specifically, if N (N is an integer greater than 1) common beams of a same type are indicated in the reference cell, and the reference cell belongs to N cell groups, a 1^{st} common beam in the N common beams of the same type corresponds to a 1^{st} cell group in the N cell groups, a 2^{nd} common beam in the N common beams of the same type corresponds to a 2^{nd} cell group in the N cell groups, ..., and an N^{th} common beam in the N common beams of the same type corresponds to an N^{th} cell group in the N cell groups.

The 1^{st} common beam to the N^{th} common beam may be specifically the 1^{st} to the N^{th} common beams in the N common beams of the same type that are indicated in the reference cell. For example, the network device indicates the N common beams of the same type of the reference cell to the terminal device using DCI signaling, and the N common beams of the same type are indicated by N TCI field values in DCI. In this case, the 1^{st} common beam is a common beam indicated by a 1^{st} TCI field, the 2^{nd} common beam is a 2^{nd} TCI field, ..., and the N^{th} common beam is a common beam indicated by an N^{th} TCI field. For another example, the DCI has only one TCI field, and can indicate only one common beam of a same type. In addition, there is further a field or some bits of a field in the DCI, to indicate which one of the N common beams of the same type is the common beam indicated by the DCI. For example, when N=2, there is a field or some bits of a field in the DCI, to indicate whether the common beam indicated by the DCI is the 1^{st} common beam or the 2^{nd} common beam. When a value of the field or these bits is 0, the DCI indicates the 1^{st} common beam; or when a value of the field or these bits is 1, the DCI indicates the 2^{nd} common beam. For another example, the DCI has only one TCI field, and can indicate only one common beam of a same type. The DCI is associated with N control resource set group identifiers. A common beam that is indicated by the DCI and that is associated with a control resource set identifier equal to 0 is the 1^{st} common beam, a common beam that is indicated by the DCI and that is associated with a control resource set identifier equal to 1 is the 2^{nd} common beam, and so on. For another example, the DCI has only one TCI field, but one field value of the TCI field may be used to indicate N common beams of a same type. In this case, the 1^{st} common beam is the 1^{st} one of the N common beams of the unified type that are indicated by the one TCI field value, the 2^{nd} common beam is the 2^{nd} one of the N common beams of the unified type that are indicated by the one TCI field value, ..., and the N^{th} common beam is the N^{th} one of the N common beams of the unified type that are indicated by the one TCI field value.

The 1^{st} cell group to the N^{th} cell group are specifically the 1^{st} cell group to the N^{th} cell group in the N cell groups to which the reference cell belongs. The 1^{st} cell group to the N^{th} cell group may be specifically a 1^{st} cell group to an N^{th} cell group in a configuration order, that is, a cell group in a 1^{st} position in the configuration order is the 1^{st} cell group, a cell group in a 2^{nd} position in the configuration order is the 2^{nd} cell group, ..., and a cell group in an N^{th} position in the configuration order is the N^{th} cell group. Alternatively, the 1^{st} cell group to the N^{th} cell group may be specifically a 1^{st} cell group to an N^{th} cell group that are arranged in ascending order of cell group indexes, that is, a cell group with a smallest index is the 1^{st} cell group, a cell group with a second smallest index is the 2^{nd} cell group, ..., and a cell group with an N^{th} smallest index is the N^{th} cell group. Alternatively, the 1^{st} cell group to the N^{th} cell group may be determined in an order opposite to the foregoing order, that is, N cell groups arranged in a reverse order of a configuration order or in descending order of cell group indexes are the 1^{st} cell group to the N^{th} cell group.

In Case 2.1, if a type of the first cell changes from a multi-beam cell to a single-beam cell, the first cell can indicate only a single common beam of a same type, for example, a single uplink and downlink joint common beam, a single uplink common beam, and/or a single downlink common beam. In this case, the single common beam of the same type may be used as a second beam corresponding to each of the N cell groups in which the first cell is located.

Case 2.2: The first cell belongs to only the first cell group.

The reference cell belongs to only a single cell group. In this case, any one of the following methods may be used.

2.2.1: The second beam is the first beam, that is, the second beam includes N beams.

The plurality of common beams of the same type that are indicated in the reference cell are all used for the single cell group to which the reference cell belongs, that is, the cell group uses the plurality of common beams of the same type that are indicated in the reference cell.

2.2.2: When a first condition is satisfied, the second beam is one of the N beams; or when a first condition is not satisfied, the second beam is the first beam, that is, the second beam includes N beams.

The first condition includes:
the first cell group includes at least one single-beam cell; and/or
the first cell group includes a cell that also belongs to another cell group.

How the single cell group uses the plurality of common beams of the same type that are indicated in the reference cell is determined based on the first condition. Specifically, when the first condition is satisfied, one of the plurality of common beams of the same type that are indicated in the reference cell is used for the single cell group to which the reference cell belongs. Further, the single cell group uses a 1^{st} common beam in the plurality of common beams of the same type that are indicated in the reference cell. The 1^{st} common beam may be a common beam indicated by a 1^{st} TCI field, or may be a common beam indicated by the DCI when a value of a field or some bits that are in the DCI and that are used to indicate a common beam sequence number is a specific value. For details, refer to specific definitions of the 1^{st} common beam to the N^{th} common beam in Case 2.1. When the first condition is not satisfied, the plurality of common beams of the same type that are indicated in the reference cell are all used for the single cell group to which the reference cell belongs, that is, the cell group uses the plurality of common beams of the same type that are indicated in the reference cell.

The first condition may be one or a combination of the following:
the single cell group includes a single-beam cell; and
a cell in the single cell group belongs to a plurality of cell groups.

The foregoing are methods used in the two different cases to determine, based on the common beam indicated in the reference cell, the common beam corresponding to the cell group to which the reference cell belongs, that is, different methods are used in different cases to determine the common beam corresponding to the cell group to which the reference cell belongs. In another implementable method, it may be restricted that one of the foregoing cases does not occur. For example, it may be specified that a multi-beam cell cannot be used as a reference cell, and only a single-beam cell can be used as a reference cell. In other words, a plurality of common beams of a same type cannot be indicated in the reference cell, and only one common beam of a same type can be indicated. In extension, any one or more of the following constraints may be further used to reduce possible cases, to simplify beam indication logic:
a single-beam cell and a multi-beam cell cannot belong to a same cell group;
if a single-beam cell and a multi-beam cell are configured in a same cell group, only the single-beam cell can be used as a reference cell;
if a single-beam cell and a multi-beam cell are configured in a same cell group, the single-beam cell cannot be used as a reference cell;
if a single-beam cell and a multi-beam cell are configured in a same cell group, only the multi-beam cell can be used as a reference cell;
if a single-beam cell and a multi-beam cell are configured in a same cell group, the multi-beam cell cannot be used as a reference cell;
a cell cannot belong to a plurality of cell groups;
if a cell belongs to a plurality of cell groups, the cell cannot be used as a reference cell, that is, only a cell that belongs to only a single cell group can be used as a reference cell;
if a cell group includes a cell that belongs to a plurality of cell groups, the reference cell can only be the cell that belongs to a plurality of cell groups, and if there are a plurality of such cells, one of the cells may be selected as the reference cell, where there are a plurality of implementations for determining a cell specifically to be used, for example, a cell with a smallest cell index, a cell with a largest cell index, or a 1^{st} or last cell in a configuration order is used;
if there are a plurality of cells that belong to a plurality of cell groups, for any two such cells, cell groups to which the two cells belong are either totally the same or totally different, that is, cannot be partially the same, where for example, a case in which a cell 1 belongs to a cell group 1 and a cell group 2 and a cell 2 belongs to a cell group 3 and a cell group 4 is allowed; for another example, a case in which a cell 1 belongs to a cell group 1 and a cell group 2 and a cell 2 belongs to the cell group 1 and the cell group 2 is also allowed; and for another example, a case in which a cell 1 belongs to a cell group 1 and a cell group 2 and a cell 2 belongs to the cell group 1 and a cell group 3 is not allowed because cell groups to which the cell 1 and the cell 2 belong partially overlap;
when a multi-beam cell belongs to a single cell group, the multi-beam cell cannot be used as a reference cell; and
when a multi-beam cell belongs to a single cell group, if the first condition is satisfied, the multi-beam cell cannot be used as a reference cell.

In Case 2.2, if a type of the first cell changes from a single-beam cell to a multi-beam cell, the first cell indicates a plurality of common beams of a same type, for example, a plurality of uplink and downlink joint common beams, a plurality of uplink common beams, and/or a plurality of downlink common beams. In this case, the 1^{st} one of the plurality of common beams of the same type may be used as a second beam corresponding to the single cell group in which the first cell is located, or the plurality of common beams of the same type are all used as second beams corresponding to the single cell group in which the first cell is located.

703: The terminal device determines a third beam of the second cell in the first cell group based on the second beam of the first cell group.

After the second beam is determined, the third beam of the second cell may be determined based on a quantity of second beams and a type of the second cell. It may be understood that the third beam is a beam that is determined by the second cell based on the first cell group and that can be used for common beam indication in the cell group.

After a common beam corresponding to a cell group is determined, a common beam used by each cell in the cell group may be determined based on the common beam corresponding to the cell group. For example, some cells belong to a plurality of cell groups, and common beams of the cells may be determined based on common beams corresponding to the plurality of cell groups. For any cell (except the reference cell) in the cell group, a common beam of the cell is specifically determined in the following several cases.

Case 1: If the second cell belongs to only the first cell group,
the cell belongs to only a single cell group, and in this case, there are further the following two cases.

1.1: If the second beam includes only a single common beam of a same type, the third beam is the second beam.

The second beam includes only one beam, that is, the cell group corresponds to a single common beam of a same type. To be specific, the single common beam of the same type is determined for the cell group using the method in step 702, for example, a single uplink and downlink joint common beam, or a single uplink common beam and/or a single downlink common beam. In this case, the single common beam of the same type is used as the common beam of the cell.

1.2: The second beam includes N beams, where N is an integer greater than 1.

The cell group corresponds to a plurality of common beams of a same type. To be specific, the plurality of common beams of the same type are determined for the cell group using the method in step 702. In this case, any one of the following several methods may be used.

1.2.1: The third beam is a beam in the second beam.

One (for example, the 1^{st} one, the last one, or any one in the middle) of the plurality of common beams of the same type is used as a common beam of the cell.

1.2.2: The third beam is the second beam.

The plurality of common beams of the same type are used as common beams of the cell, that is, all the common beams are used.

1.2.3: When the second cell is a single-beam cell, the third beam is a beam in the second beam; or when the second cell is a multi-beam cell, the third beam is the second beam.

Whether the cell uses one or more of the plurality of common beams of the same type in the cell group is determined based on whether the cell is a single-beam cell or a multi-beam cell:
if the cell is a single-beam cell, one of the plurality of common beams of the same type in the cell group is used as a common beam of the cell; or
if the cell is a multi-beam cell, the plurality of common beams of the same type in the cell group are used as common beams of the cell.

Specifically, whether the cell is a single-beam cell or a multi-beam cell may be configured using RRC signaling, or which one of the N beams is used by the cell may be configured using an RRC parameter. For example, N=2, and whether the cell uses the 1^{st} one, the 2^{nd} one, or both of the N=2 beams is configured using the RRC parameter.

In Case 1.1, that is, when the second beam includes the only one beam, the foregoing configuration parameter does not have an actual function, and the terminal device may ignore the configuration parameter.

Case 2: In addition to belonging to the first cell group, the second cell also belongs to at least one other cell group.

Specifically, the second cell belongs to N cell groups, where N is an integer greater than 1. The N cell groups include the first cell group. In this case, there are further the following two cases.

Case 2.1: Each of the N cell groups corresponds to a single common beam of a same type, and the third beam includes the single common beam of the same type corresponding to each of the N cell groups. In other words, the single common beam of the same type corresponding to each of the N cell groups is used as N common beams of this type of the second cell.

Optionally, if the N cell groups correspond to a same common beam, the second cell uses the common beam instead of N repeated common beams.

Optionally, the single common beam of the same type corresponding to each of the N cell groups is used as the N common beams of this type of the second cell:
a single common beam of the same type corresponding to an i^{th} cell group in the N cell groups is used as an i^{th} common beam in the N common beams of this type of the second cell, where i is an integer greater than 0.

The i^{th} cell group is specifically an i^{th} cell group in the N cell groups in a configuration order. Alternatively, the i^{th} cell group may be an i^{th} cell group in the N cell groups arranged in ascending or descending order of indexes.

Case 2.2: At least one of the N cell groups corresponds to a plurality of common beams of a same type. In this case, one of the plurality of common beams is used as a common beam of the second cell. In other words, one common beam of the same type is determined from each of the N cell groups as N common beams of the second cell. If a cell group corresponds to a plurality of common beams of the same type, one of the common beams needs to be selected. Specifically, the 1^{st} one, the last one, or the one with a largest or smallest index may be selected.

According to the foregoing method, a common beam of each cell in each cell group may be determined based on a common beam of a same type corresponding to the cell group. 704: The terminal device determines a target beam based on the third beam, and then transmits data with the network device using the target beam.

It should be noted that the target beam is one or more beams in the third beam (when the third beam includes a plurality of beams), the third beam is a common beam corresponding to the second cell, and the target beam is a common beam actually used by the terminal device when performing network transmission. It may be understood that different data is transmitted using different common beams. After indicating the common beam to the terminal device via the reference cell, the network device determines, in the foregoing several cases, how the common beam is used for all cells in the cell group to which the reference cell belongs. The terminal device processes common beam indication information via a processor (the processor 101 in FIG. 6) of the terminal device, determines, based on the cell grouping status, a common beam corresponding to each cell, and then records, via a memory (the memory 102 in FIG. 6) of the terminal device, common beam information corresponding to each cell, for subsequent transmission.

It may be understood that in this step, after the common beam of the second cell is determined, the common beam becomes valid in the terminal device and the network device. That the common beam becomes valid means that after receiving the common beam indication information (for example, the DCI signaling) in the reference cell, the terminal device needs to wait for a specific time to formally use the indicated common beam for transmission in all cells in the cell group to which the reference cell belongs. The network device and the terminal device agree on the specific time. For example, the specific time is configured by the network device for the terminal device. After the specific time, the network device and the terminal device perform sending and receiving using the new beam indicated in the reference cell, to ensure that no error occurs in using the new beam, that is, avoid a problem that the network device uses the new beam while the terminal device still uses an old beam.

The solution in this embodiment of this application includes various possible cell grouping methods for a multi-beam cell, and a plurality of solutions for indicating a common beam by group in various grouping methods, to indicate a common beam of the multi-beam cell in a form of a cell group. Therefore, beam indication signaling overheads are reduced, and a problem that the common beam cannot be indicated for the multi-beam cell in the form of the cell group is resolved.

The following are several specific implementations of the first aspect of embodiments of this application in different cases.

In a first implementation,
if the first cell is a single-beam cell, the second cell is a multi-beam cell, and the second cell belongs to only the first cell group,
that is, the first beam includes only one beam,
the second beam is the first beam, and the third beam is the second beam.

When the first cell is a single-beam cell, as the reference cell, the first cell can indicate the only one beam. Therefore, the first beam includes the only one beam. Because the first beam includes the only one beam, as a common beam of the first cell group, the second beam also includes only one beam. When the second beam includes the only one beam, and the second cell belongs to only the first cell group, the third beam is the second beam, that is, the third beam also includes only one beam. In other words, the first beam, the second beam, and the third beam are a same beam.

In this embodiment, for a case in which the first cell is a single-beam cell, the second cell is a multi-beam cell, and the first cell and the second cell belong to only the first cell group, a solution for indicating a common beam of the second cell is proposed, to resolve a problem in a related technology that a common beam cannot be indicated in a form of a cell group in this case.

In a second implementation,
if the first cell is a single-beam cell, the second cell is a multi-beam cell, the second cell also belongs to at least one other cell group, and each of the other cell group to which the second cell belongs corresponds to one beam,
that is, the first beam includes only one beam,
the second beam is the first beam.

The third beam includes the second beam and the beam corresponding to each of the other cell group.

When the first cell is a single-beam cell, as the reference cell, the first cell can indicate the only one beam. Therefore, the first beam includes the only one beam. Because the first beam includes the only one beam, and the second beam is used as a common beam of the first cell group, the second beam is the first beam, that is, also includes only one beam. Because the second cell also belongs to the other cell group, and each of the other cell group to which the second cell belongs corresponds to one beam, the third beam corresponding to the second cell includes the second beam and the beam corresponding to each of the other cell group. In other words, the second cell uses common beams of a plurality of cell groups as common beams of the cell.

Optionally, that the third beam includes the second beam and the beam corresponding to each of the other cell group specifically includes:
using, in a grouping order of the first cell group and each of the other cell group in the cell grouping information, a beam corresponding to an i^{th} cell group in the first cell group and the other cell group as an i^{th} beam in the third beam, where i is an integer greater than 0.

The network device sends configuration signaling to the terminal device. The i^{th} cell group may be specifically an i^{th} cell group in a configuration order, or may be specifically an i^{th} cell group in a case of arrangement in ascending order of cell group indexes. Alternatively, the i^{th} cell group may be determined in an order opposite to the foregoing order, that is, the i^{th} cell group is determined in a reverse order of a configuration order or in descending order of cell group indexes.

In this embodiment, for a case in which the first cell is a single-beam cell, the second cell is a multi-beam cell, the first cell belongs to only the first cell group, the second cell also belongs to the at least one other cell group, and each of the other cell group to which the second cell belongs corresponds to one beam, a solution for indicating a common beam of the second cell is proposed, to resolve a problem in a related technology that a common beam cannot be indicated in a form of a cell group in this case.

In a third implementation,
if the first cell is a multi-beam cell, the second cell is a single-beam cell or a multi-beam cell, the first cell belongs to N cell groups, the second cell belongs to only the first cell group, and N is an integer greater than 1,
the first beam includes N beams.

The second beam is one of the N beams, and the third beam is the second beam.

When the first cell belongs to the N cell groups, it may be specified that a quantity of beams indicated in the reference cell is equal to a quantity of cell groups to which the reference cell belongs. In other words, the first cell is a multi-beam cell, and as the reference cell, the first cell may indicate the N beams. Therefore, the first beam includes the N beams. Because the first cell indicates the N beams and belongs to the N cell groups, one of the N beams is allocated to each cell group to which the first cell belongs, and the second beam is one of the N beams. When the second beam includes only one beam, and the second cell belongs to only the first cell group, regardless of whether the second cell is a single-beam cell or a multi-beam cell, the third beam is the second beam, that is, the third beam also includes only one beam. In other words, the second cell uses one of the N beams indicated via the first cell as a common beam of the second cell.

Optionally, if the first cell group is an i^{th} cell group in the N cell groups to which the first cell belongs, and i is an integer greater than 0 and not greater than N, that the second beam is one of the N beams specifically includes: The second beam is an i^{th} beam in the N beams.

It may be understood that a plurality of beams indicated in the reference cell are in a one-to-one correspondence with a plurality of cell groups to which the reference cell belongs. In this case, a 1^{st} beam in the N beams corresponds to a 1^{st} cell group in the N cell groups, a 2^{nd} common beam in the N beams corresponds to a 2^{nd} cell group in the N cell groups, ..., and an N^{th} beam in the N beams corresponds to an N^{th} cell group in the N cell groups.

In this embodiment, for a case in which the first cell is a multi-beam cell, the second cell is a single-beam cell or a multi-beam cell, the first cell belongs to a plurality of cell groups, and the second cell belongs to only the first cell group, a solution for indicating the common beam of the second cell is proposed, to resolve a problem in a related technology that a common beam cannot be indicated in a form of a cell group in this case.

In a fourth implementation,
if the first cell is a multi-beam cell, the second cell is a multi-beam cell, the first cell belongs to N cell groups, the second cell also belongs to at least one other cell group, each of the other cell group to which the second cell belongs corresponds to one beam, and N is an integer greater than 1,
the first beam includes N beams.

The second beam is one of the N beams.

The third beam includes the second beam and the beam corresponding to each of the other cell group.

When the first cell belongs to the N cell groups, and the first beam includes the N beams, as described in the third implementation, one of the N beams is allocated to each cell group to which the first cell belongs, and the second beam is one of the N beams. When the second beam includes only one beam, because the second cell also belongs to the other cell group, and each of the other cell group to which the second cell belongs corresponds to one beam, the third beam corresponding to the second cell includes the second beam and the beam corresponding to each of the other cell group. In other words, the second cell uses common beams of a plurality of cell groups as common beams of the cell.

Optionally, if the first cell group is an i^{th} cell group in the N cell groups to which the first cell belongs, and i is an integer greater than 0 and not greater than N, that the second beam is one of the N beams specifically includes: The second beam is an i^{th} beam in the N beams.

It may be understood that this step is consistent with the optional solution in the third implementation, and details are not described herein again.

Optionally, that the third beam includes the second beam and the beam corresponding to each of the other cell group specifically includes:
using, in a grouping order of the first cell group and each of the other cell group in the cell grouping information, a beam corresponding to an i^{th} cell group in the first cell group and the other cell group as an i^{th} beam in the third beam, where i is an integer greater than 0.

The network device sends configuration signaling to the terminal device. The i^{th} cell group may be specifically an i^{th} cell group in a configuration order, or may be specifically an i^{th} cell group in a case of arrangement in ascending order of cell group indexes. Alternatively, the i^{th} cell group may be determined in an order opposite to the foregoing order, that is, the i^{th} cell group is determined in a reverse order of a configuration order or in descending order of cell group indexes.

In this embodiment, for a case in which the first cell is a multi-beam cell, the second cell is a multi-beam cell, the first cell belongs to the N cell groups, the second cell also belongs to the at least one other cell group, and each of the other cell group to which the second cell belongs corresponds to one beam, a solution for indicating a common beam of the second cell is proposed, to resolve a problem in a related technology that a common beam cannot be indicated in a form of a cell group in this case.

In a fifth implementation,
if the first cell is a multi-beam cell, and both the first cell and the second cell belong to only the first cell group,
that is, the first beam includes N beams, and N is an integer greater than 1,
the second beam is the first beam.

The third beam is a beam in the second beam.

When the first cell is a multi-beam cell, as the reference cell, the first cell may indicate the N beams. Therefore, the first beam includes the N beams. Because the first cell belongs to only the first cell group, and the second beam is used as a common beam of the first cell group, the second beam is the first beam, that is, also includes N beams. Because the second cell belongs to only the first cell group, the second cell selects one of the N beams as a common beam of the cell, that is, the third beam is a beam in the second beam.

In this embodiment, for a case in which the first cell is a multi-beam cell, and both the first cell and the second cell belong to only the first cell group, a solution for indicating the common beam of the second cell is proposed, to resolve a problem in a related technology that a common beam cannot be indicated in a form of a cell group in this case.

In a sixth implementation,
if the first cell is a multi-beam cell, and both the first cell and the second cell belong to only the first cell group,
that is, the first beam includes N beams, and N is an integer greater than 1,
the second beam is the first beam.

The third beam is the second beam.

When the first cell is a multi-beam cell, as the reference cell, the first cell may indicate the N beams. Therefore, the first beam includes the N beams. Because the first cell belongs to only the first cell group, and the second beam is used as a common beam of the first cell group, the second beam is the first beam, that is, also includes N beams. Because the second cell belongs to only the first cell group, the second cell selects the N beams as common beams of the cell, that is, the third beam is the second beam.

In this embodiment, for a case in which the first cell is a multi-beam cell, and both the first cell and the second cell belong to only the first cell group, a solution for indicating a common beam of the second cell is proposed, to resolve a problem in a related technology that a common beam cannot be indicated in a form of a cell group in this case.

In a seventh implementation,
if the first cell is a multi-beam cell, and both the first cell and the second cell belong to only the first cell group,
that is, the first beam includes N beams, and N is an integer greater than 1,
the second beam is the first beam.

When the second cell is a single-beam cell, the third beam is a beam in the second beam.

When the second cell is a multi-beam cell, the third beam is the second beam.

When the first cell is a multi-beam cell, as the reference cell, the first cell may indicate the N beams. Therefore, the first beam includes the N beams. Because the first cell belongs to only the first cell group, and the second beam is used as a common beam of the first cell group, the second beam is the first beam, that is, also includes N beams. Because the second cell belongs to only the first cell group, when the second cell is a single-beam cell, one of the N beams is used as a common beam of the cell, that is, the third beam is a beam in the second beam. When the second cell is a multi-beam cell, the N beams are selected as common beams of the cell, that is, the third beam is the second beam.

In this embodiment, for a case in which the first cell is a multi-beam cell, and both the first cell and the second cell belong to only the first cell group, a solution for indicating a common beam of the second cell is proposed, to resolve a problem in a related technology that a common beam cannot be indicated in a form of a cell group in this case.

In an eighth implementation,
if the first cell is a multi-beam cell, and both the first cell and the second cell belong to only the first cell group,
that is, the first beam includes N beams, and N is an integer greater than 1,
when a first condition is satisfied, the second beam is one of the N beams.

The third beam is the second beam.

The first condition includes:
the first cell group includes at least one single-beam cell; and/or
the first cell group includes a cell that also belongs to another cell group.

When the first cell is a multi-beam cell, as the reference cell, the first cell may indicate the N beams. Therefore, the first beam includes the N beams. When the first condition is satisfied, one of a plurality of beams indicated in the reference cell is used for the cell group to which the reference cell belongs, that is, the second beam is one of the N beams. The first condition may be one or a combination of the following: The first cell group includes a single-beam cell; and a cell in the first cell group belongs to a plurality of cell groups. When the second beam includes only one beam, and the second cell belongs to only the first cell group, regardless of whether the second cell is a single-beam cell or a multi-beam cell, the third beam is the second beam, that is, the third beam also includes only one beam. In other words, the second cell uses one of the N beams indicated via the first cell as a common beam of the second cell.

It may be understood that when the first condition is not satisfied, the second beam is the first beam, that is, the second beam includes N beams. In this case, selection logic for the third beam matches the fifth to the eighth implementations based on a type of the second cell. Details are not described herein again.

Optionally, that the second beam is one of the N beams specifically includes:
the second beam is a 1^{st} beam in the N beams.

There may be the following several methods for selecting the 1^{st} beam: 1. The network device indicates the N beams of the reference cell to the terminal device using the DCI signaling. The N beams are indicated by N TCI field values in DCI. In this case, the 1^{st} beam is a beam indicated by a 1^{st} TCI field, and a 2^{nd} beam is a beam indicated by a 2^{nd} TCI field. 2. The network device sends configuration signaling to the terminal device to configure, for the terminal device, information related to a common beam. Each beam is arranged in ascending order of a configuration order, and a beam with a smallest or largest index number is used as the 1^{st} beam.

In this embodiment, for a case in which the first cell is a multi-beam cell, both the first cell and the second cell belong to only the first cell group, and the first cell group satisfies the first condition, a solution for indicating the common beam of the second cell is proposed, to resolve a problem in a related technology that a common beam cannot be indicated in a form of a cell group in this case.

In a ninth implementation,
if the first cell is a multi-beam cell, the first cell belongs to only the first cell group, the second cell also belongs to at least one other cell group, and each of the other cell group corresponds to one beam,
that is, the first beam includes N beams, and N is an integer greater than 1,
when a first condition is satisfied, the second beam is one of the N beams.

The third beam includes the second beam and the beam corresponding to each of the other cell group.

The first condition includes:
the first cell group includes at least one single-beam cell; and/or
the first cell group includes a cell that also belongs to another cell group.

When the first cell is a multi-beam cell, as the reference cell, the first cell may indicate the N beams. Therefore, the first beam includes the N beams. When the first condition is satisfied, one of a plurality of beams indicated in the reference cell is used for the cell group to which the reference cell belongs, that is, the second beam is one of the N beams. The first condition may be one or a combination of the following: The first cell group includes a single-beam cell; and a cell in the first cell group belongs to a plurality of cell groups. When the second beam includes only one beam, because the second cell also belongs to the other cell group, and each of the other cell group to which the second cell belongs corresponds to one beam, the third beam corresponding to the second cell includes the second beam and the beam corresponding to each of the other cell group. In other words, the second cell uses common beams of a plurality of cell groups as common beams of the cell.

It may be understood that when the first condition is not satisfied, the second beam is the first beam, that is, the second beam includes N beams. In this case, selection logic for the third beam matches the fifth to the eighth implementations based on a type of the second cell. Details are not described herein again.

Optionally, that the second beam is one of the N beams specifically includes:
the second beam is a 1^{st} beam in the N beams.

Selection of the 1^{st} beam is consistent with that in the eighth implementation, and details are not described herein again.

Optionally, that the third beam includes the second beam and the beam corresponding to each of the other cell group specifically includes:
using, in a grouping order of the first cell group and each of the other cell group in the cell grouping information, a beam corresponding to an i^{th} cell group in the first cell group and the other cell group as an i^{th} beam in the third beam, where i is an integer greater than 0.

The network device sends configuration signaling to the terminal device. The i^{th} cell group may be specifically an i^{th} cell group in a configuration order, or may be specifically an i^{th} cell group in a case of arrangement in ascending order of cell group indexes. Alternatively, the i^{th} cell group may be determined in an order opposite to the foregoing order, that is, the i^{th} cell group is determined in a reverse order of a configuration order or in descending order of cell group indexes.

In this embodiment, for a case in which the first cell is a multi-beam cell, the first cell belongs to only the first cell group, the first cell group satisfies the first condition, the second cell also belongs to the at least one other cell group, and each of the other cell group corresponds to one beam, a solution for indicating a common beam of the second cell is proposed, to resolve a problem in a related technology that a common beam cannot be indicated in a form of a cell group in this case.

In a tenth implementation,
if the first cell is a multi-beam cell, the second cell is a multi-beam cell, the first cell belongs to only the first cell group, and the second cell also belongs to at least one other cell group,
that is, the first beam includes N beams, and N is an integer greater than 1,
the second beam is the first beam.

The third beam includes a beam in the second beam and a beam in the beam corresponding to each of the other cell group.

When the first cell is a multi-beam cell, as the reference cell, the first cell may indicate the N beams. Therefore, the first beam includes the N beams. Because the first cell belongs to only the first cell group, and the second beam is used as a common beam of the first cell group, the second beam is the first beam, that is, also includes N beams. Because the second cell also belongs to the other cell group, only one beam in the second beam is selected as a component of the third beam. Similarly, if a single other cell group to which the second cell belongs corresponds to a plurality of beams, only one of the plurality of beams is used as a component of the third beam; or if a single other cell group corresponds to only one beam, the beam is directly used as a component of the third beam. It may be understood that regardless of a quantity of beams corresponding to a single cell group to which the second cell belongs, only one of the beams is used as a common beam of the second cell. In other words, when the second cell belongs to M cell groups, the third beam includes M beams, where M is an integer greater than 0.

An embodiment of a second aspect of this application provides a cell beam indication method and a related device therefor. A network device and a terminal device may determine, based on a cell grouping status, a common beam corresponding to each cell in each cell group. In the method, a cell in a cell group may be a multi-beam cell, that is, the cell may transmit data using at least two common beams based on a cell type of the cell. Therefore, beam indication signaling overheads are reduced, and a problem that a common beam cannot be indicated for a multi-beam cell in a form of a cell group is resolved.

The following describes in detail the cell handover method provided in this embodiment of this application. FIG. 7 is a schematic flowchart of the cell beam indication method according to an embodiment of this application. The method includes the following steps.

701: The network device sends configuration information to the terminal device, where the configuration information is used to configure at least one cell group, and each cell group includes a first cell and a second cell.

It may be understood that after grouping cells based on types of the cells, the network device sends a radio resource control (radio resource control, RRC) configuration instruction to the terminal device to configure, for the terminal device, information related to a common beam, for example, cell grouping information, a common beam set, and a common beam type.

705: The network device indicates a first beam to the terminal device using signaling in a first cell in a first cell group, where the first beam is used by the terminal device to determine a second beam corresponding to the first cell group, the second beam is used by the terminal device to determine a third beam of a second cell in the first cell group, and the first cell group includes at least one multi-beam cell.

It should be noted that for a cell group, the network device needs to indicate a common beam only in one cell in the cell group, and then determine a common beam of the cell group based on the common beam. After the common beam of the cell group is determined, a common beam of another cell in the cell group is determined based on the common beam of the cell group. A cell whose common beam is directly indicated by the network device is referred to as a reference cell, that is, the first cell in this embodiment of this application.

706: The network device determines the second beam based on the first beam.

The first beam indicated via the first cell in the first cell group is a common beam corresponding to the reference cell. The second beam corresponding to the first cell group is determined based on the first beam, where the second beam represents an indicated common beam of the cell group. The network device sends DCI signaling to the terminal device via the reference cell in the cell group, to indicate the common beam of the reference cell, where the indicated common beam is a common beam in the common beam set configured in the configuration information. Alternatively, the common beam may be indicated by MAC-CE (Medium access control-control element, medium access control-control element) signaling and DCI signaling. To be specific, the network device first sends the MAC-CE signaling to the terminal device to indicate a common beam subset (the common beam subset is a subset of the common beam set configured in the configuration information), and then sends the DCI signaling to the terminal device to indicate the common beam (the common beam is a common beam in the common beam subset). The network device sends the configuration information via a transmitter of the network device, and the terminal device receives the configuration information via a receiver of the terminal device. The network device sends beam indication information via the transmitter (the transmitter 2031 in FIG. 6) of the network device, and the terminal device receives the beam indication information via the receiver (the receiver 1032 in FIG. 6) of the terminal device.

Case 1: If the first cell is a single-beam cell, that is, the first beam includes only one beam, and the first cell belongs to only the first cell group, the second beam is one first beam.

A single common beam of a same type is indicated in the reference cell. For example, a single uplink and downlink joint common beam is indicated, or a single uplink common beam and a single downlink common beam are indicated. In other words, the reference cell is a single-beam cell. In this case, the terminal device uses the single common beam as the cell group to which the reference cell belongs.

Case 2: If the first cell is a multi-beam cell, that is, the first beam includes N beams, and N is an integer greater than 1,
a plurality of common beams of a same type are indicated in the reference cell, in other words, the reference cell is a multi-beam cell, and in this case, there may further be the following cases.

2.1: The first cell belongs to N cell groups, and the second beam is one of the N beams.

The reference cell belongs to a plurality of cell groups. In this case, the plurality of common beams of the same type that are indicated in the reference cell are respectively used as common beams of the plurality of cell groups to which the reference cell belongs.

2.2: The first cell belongs to only the first cell group.

The reference cell belongs to only a single cell group. In this case, any one of the following methods may be used.

2.2.1: The second beam is the first beam, that is, the second beam includes N beams.

The plurality of common beams of the same type that are indicated in the reference cell are all used for the single cell group to which the reference cell belongs, that is, the cell group uses the plurality of common beams of the same type that are indicated in the reference cell.

2.2.2: When a first condition is satisfied, the second beam is one of the N beams; or when a first condition is not satisfied, the second beam is the first beam, that is, the second beam includes N beams.

The first condition includes:
the first cell group includes at least one single-beam cell; and/or
the first cell group includes a cell that also belongs to another cell group.

How the single cell group uses the plurality of common beams of the same type that are indicated in the reference cell is determined based on the first condition. Specifically, when the first condition is satisfied, one of the plurality of common beams of the same type that are indicated in the reference cell is used for the single cell group to which the reference cell belongs.

The first condition may be one or a combination of the following:
the single cell group includes a single-beam cell; and
a cell in the single cell group belongs to a plurality of cell groups.

707: The network device determines the third beam based on the second beam.

After the second beam is determined, the third beam of the second cell may be determined based on a quantity of second beams and a type of the second cell. It may be understood that the third beam is a beam that is determined by the second cell based on the first cell group and that can be used for common beam indication in the cell group.

After a common beam corresponding to a cell group is determined, a common beam used by each cell in the cell group may be determined based on the common beam corresponding to the cell group. For example, some cells belong to a plurality of cell groups, and common beams of the cells may be determined based on common beams corresponding to the plurality of cell groups. For any cell (except the reference cell) in the cell group, a common beam of the cell is specifically determined in the following several cases.

Case 1: If the second cell belongs to only the first cell group,
the cell belongs to only a single cell group, and in this case, there are further the following two cases.

1.1: The second beam includes only one beam, and the third beam is the second beam.

The cell group corresponds to a single common beam of a same type. In this case, the single common beam of the same type is used as a common beam of the cell.

1.2: The second beam includes N beams, where N is an integer greater than 1.

The cell group corresponds to a plurality of common beams of a same type. In this case, any one of the following several methods may be used.

1.2.1: The third beam is a beam in the second beam.

One (for example, the 1^{st} one, the last one, or any one in the middle) of the plurality of common beams of the same type is used as a common beam of the cell.

1.2.2: The third beam is the second beam.

The plurality of common beams of the same type are used as common beams of the cell, that is, all the common beams are used.

1.2.3: When the second cell is a single-beam cell, the third beam is a beam in the second beam; or when the second cell is a multi-beam cell, the third beam is the second beam.

Whether the cell uses one or more of the plurality of common beams of the same type in the cell group is determined based on whether the cell is a single-beam cell or a multi-beam cell:
if the cell is a single-beam cell, one of the plurality of common beams of the same type in the cell group is used as a common beam of the cell; or
if the cell is a multi-beam cell, the plurality of common beams of the same type in the cell group are used as common beams of the cell.

Case 2: The second cell also belongs to at least one other cell group.

The cell belongs to a plurality of cell groups. In this case, there are further the following two cases.

2.1: The second beam includes only one beam, each of the other cell group corresponds to one beam, and the third beam includes the second beam and the beam corresponding to each of the other cell group.

Each of the plurality of cell groups corresponds to a single common beam of a same type. In this case, common beams of the same type of the plurality of cell groups are used as a plurality of common beams of the cell.

2.2: The second beam includes N beams, and the third beam includes a beam in the second beam and a beam in the beam corresponding to each of the other cell group.

At least one of the plurality of cell groups corresponds to a plurality of common beams of a same type. For each such cell group, only one of a plurality of common beams of the same type of the cell group and a common beam of the same type corresponding to another cell group are used as a plurality of common beams of the same type of the cell.

According to the foregoing method, a common beam of each cell in each cell group may be determined based on a common beam of a same type corresponding to the cell group.

The foregoing describes in detail the cell beam indication method provided in embodiments of this application. The following describes a terminal device and a network device provided in embodiments of this application.

FIG. 8 is a diagram of a structure of another communication apparatus according to an embodiment of this application. The communication apparatus may be configured to perform the steps performed by the terminal device in the embodiment shown in FIG. 7. For details, refer to related descriptions in the foregoing method embodiment.

The communication apparatus 800 includes a transceiver module 801 and a processing module 802.

The transceiver module 801 may implement a corresponding communication function. The transceiver module 801 may also be referred to as a communication interface or a communication unit. The processing module 802 is configured to perform a processing operation.

Optionally, the communication apparatus 800 may further include a storage module. The storage module may be configured to store instructions and/or data. The processing module 802 may read the instructions and/or the data in the storage module, so that the communication apparatus implements the method embodiment shown in FIG. 7.

The communication apparatus 800 may be configured to perform an action performed by the terminal device in the foregoing method embodiment. The communication apparatus 800 may be a terminal device or a component that can be disposed in a terminal device. The transceiver module 801 is configured to perform a receiving-related operation on a terminal device side in the foregoing method embodiment, and the processing module 802 is configured to perform a processing-related operation on the terminal device side in the foregoing method embodiment.

Optionally, the transceiver module 801 may include a sending module and a receiving module. The sending module is configured to perform a sending operation of the terminal device in the method embodiment shown in FIG. 7. The receiving module is configured to perform a receiving operation of the terminal device in the method embodiment shown in FIG. 7.

It should be noted that the communication apparatus 800 may include the sending module, but does not include the receiving module. Alternatively, the communication apparatus 800 may include the receiving module, but not include the sending module. This may be specifically determined depending on whether the foregoing solution performed by the communication apparatus 800 includes a sending action and a receiving action.

For example, the communication apparatus 800 is configured to perform the following solution.

The transceiver module 801 is configured to receive configuration information sent by a network device, where the configuration information is used to configure at least one cell group, and each cell group includes a first cell and a second cell.

The processing module 802 is configured to determine, based on a first beam indicated via a first cell in a first cell group, a second beam corresponding to the first cell group, where the first cell group includes at least one multi-beam cell; and is further configured to determine, based on the second beam, a third beam of a second cell in the first cell group.

In a possible implementation, determining the second beam based on the first beam specifically includes one or more of the following:
the communication apparatus 800 determines, if the first beam includes only one beam, that the second beam is the first beam;
the communication apparatus 800 determines, if the first cell belongs to M cell groups and the first beam includes M beams, that the second beam is one of the M beams, where M is an integer greater than 1;
the communication apparatus 800 determines, if the first cell belongs to only the first cell group and the first beam includes N beams, that the second beam is the first beam, where N is an integer greater than 1; and
the communication apparatus 800 determines, when a first condition is satisfied if the first cell belongs to only the first cell group and the first beam includes N beams, that the second beam is one of the N beams.

The first condition includes:
the first cell group includes at least one single-beam cell; and/or
the first cell group includes a cell that also belongs to another cell group.

In a possible implementation, that the communication apparatus 800 determines, if the first cell belongs to the M cell groups and the first beam includes the M beams, that the second beam is one of the M beams specifically includes:
the communication apparatus 800 determines, if the first cell belongs to the M cell groups, the first beam includes the M beams and the first cell group is an i^{th} cell group in the M cell groups to which the first cell belongs, that the second beam is an i^{th} beam in the M beams, where i is an integer greater than 0 and not greater than N.

In a possible implementation, that the communication apparatus 800 determines, when the first condition is satisfied if the first cell belongs to only the first cell group and the first beam includes the N beams, that the second beam is one of the N beams specifically includes:
if the first cell belongs to only the first cell group, and the first beam includes the N beams, when the first condition is satisfied, the communication apparatus 800 determines that the second beam is a 1^{st} beam in the N beams.

In a possible implementation, that the communication apparatus 800 determines the third beam based on the second beam specifically includes one or more of the following:
if the second cell belongs to only the first cell group, and the second beam includes only one beam, the communication apparatus 800 determines that the third beam is the second beam;
if the second cell belongs to only the first cell group, and the second beam includes N beams, the communication apparatus 800 determines that the third beam is a beam in the second beam, the communication apparatus 800 determines that the third beam is the second beam, the communication apparatus 800 determines, when the second cell is a single-beam cell, that the third beam is a beam in the second beam, or the communication apparatus 800 determines, when the second cell is a multi-beam cell, that the third beam is the second beam, where N is an integer greater than 1; and
the communication apparatus 800 determines, if the second cell also belongs to at least one other cell group, the second beam includes only one beam and each of the other cell group corresponds to one beam, that the third beam includes the second beam and the beam corresponding to each of the other cell group.

In a possible implementation, that the communication apparatus 800 determines, if the second cell also belongs to the at least one other cell group, the second beam includes the only one beam and each of the other cell group corresponds to one beam, that the third beam includes the second beam and the beam corresponding to each of the other cell group specifically includes:
if the second cell also belongs to the at least one other cell group, the second beam includes the only one beam, and each of the other cell group corresponds to one beam, using, in a grouping order of the first cell group and each of the other cell group in cell grouping information, a beam corresponding to an i^{th} cell group in the first cell group and the other cell group as an i^{th} beam in the third beam determined by the communication apparatus 800, where i is an integer greater than 0.

In a possible implementation, the configuration information is further used to configure the cell or cell group to satisfy one of constraint rules, and the constraint rules include:
a cell in each cell group belongs to only a single cell group;
when there are a plurality of cells that belong to a plurality of cell groups in the cell group, the first cell is a cell that belongs to a plurality of cell groups;
when there are a plurality of cells that belong to a plurality of cell groups in the cell group, the plurality of cells that belong to a plurality of cell groups all belong to a same cell group; and
a plurality of cells that belong to a plurality of cell groups belong to totally different cell groups.

In a possible implementation, the transceiver module 801 is further configured to: after a target beam is determined based on the third beam, transmit data with the network device using the target beam.

In this embodiment, the communication apparatus first receives the configuration information sent by the network device, to obtain a cell grouping status, where a cell group set in cell grouping information includes at least one cell group that includes a multi-beam cell. Then, the communication apparatus receives a common beam indication sent by the network device via ac reference cell, to determine a common beam used by the reference cell. Next, the communication apparatus determines, based on the common beam used by the reference cell, a common beam of a cell group in which the reference cell is located. Finally, the communication apparatus determines a common beam of another cell in the group based on the common beam of the cell group. Because there is the multi-beam cell in the cell group, it means that the reference cell and/or the another cell in the cell group may be multi-beam cells, and the reference cell and/or the another cell in the cell group may transmit data using at least two common beams based on a cell type of the reference cell and/or a cell type of the another cell in the cell group. Therefore, beam indication signaling overheads are reduced, and a problem that a common beam cannot be indicated for a multi-beam cell in a form of a cell group is resolved.

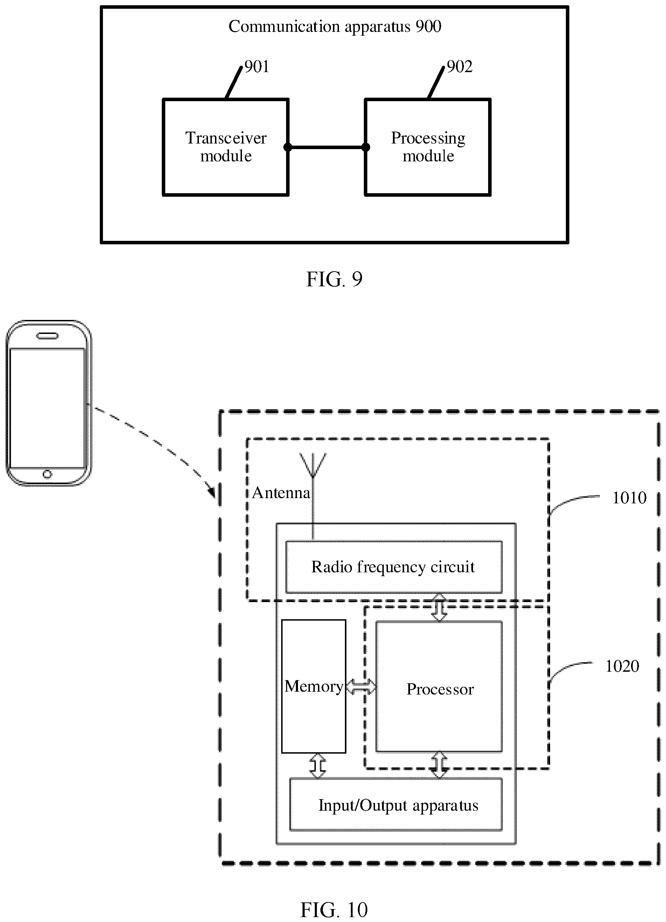

FIG. 9 is a diagram of a structure of a communication apparatus 900 according to an embodiment of this application. The communication apparatus may be configured to perform the steps performed by the network device in the embodiment shown in FIG. 7. For details, refer to related descriptions in the foregoing method embodiment.

The communication apparatus 900 includes a transceiver module 901 and a processing module 902.

The transceiver module 901 may implement a corresponding communication function. The transceiver module 901 may also be referred to as a communication interface or a communication unit. The processing module 902 is configured to perform a processing operation.

Optionally, the communication apparatus 900 may further include a storage module. The storage module may be configured to store instructions and/or data. The processing module 902 may read the instructions and/or the data in the storage module, so that the communication apparatus implements the method embodiment shown in FIG. 6.

The communication apparatus 900 may be configured to perform an action performed by the network device in the foregoing method embodiment. The communication apparatus 900 may be a network device or a component that can be disposed in a network device. The transceiver module 901 is configured to perform a receiving-related operation on a network device side in the foregoing method embodiment, and the processing module 902 is configured to perform a processing-related operation on the network device side in the foregoing method embodiment.

Optionally, the transceiver module 901 may include a sending module and a receiving module. The sending module is configured to perform a sending operation of the network device in the method embodiment shown in FIG. 6. The receiving module is configured to perform a receiving operation of the network device in the method embodiment shown in FIG. 6.

It should be noted that the communication apparatus 900 may include the sending module, but does not include the receiving module. Alternatively, the communication apparatus 900 may include the receiving module, but not include the sending module. This may be specifically determined depending on whether the foregoing solution performed by the communication apparatus 900 includes a sending action and a receiving action.

For example, the communication apparatus 900 may be configured to perform the following solution.

The transceiver module 901 is configured to send configuration information to a terminal device, where the configuration information is used to configure at least one cell group, and each cell group includes a first cell and a second cell.

The processing module 902 is configured to indicate a first beam to the terminal device via a first cell in a first cell group, where the first beam is used by the terminal device to determine a second beam corresponding to the first cell group, the second beam is used by the terminal device to determine a third beam of a second cell in the first cell group, and the first cell group includes at least one multi-beam cell; is further configured to determine the second beam based on the first beam; and is further configured to determine the third beam based on the second beam.

In a possible implementation, the communication apparatus 900 sends the configuration information to the terminal device, where the configuration information is used to configure the at least one cell group, and each cell group includes the first cell and the second cell.

The communication apparatus 900 indicates the first beam to the terminal device via the first cell in the first cell group, where the first beam is used by the terminal device to determine the second beam corresponding to the first cell group, the second beam is used by the terminal device to determine the third beam corresponding to the second cell in the first cell group, and the first cell group includes the at least one multi-beam cell.

The communication apparatus 900 determines the second beam based on the first beam.

The communication apparatus 900 determines the third beam based on the second beam.

In a possible implementation, that the communication apparatus 900 determines the second beam based on the first beam specifically includes one or more of the following:
if the first beam includes only one beam, the communication apparatus 900 determines that the second beam is one first beam;
the communication apparatus 900 determines, if the first cell belongs to M cell groups and the first beam includes M beams, that the second beam is one of the M beams, where M is an integer greater than 1;
if the first cell belongs to only the first cell group, and the first beam includes N beams, the communication apparatus 900 determines that the second beam is the first beam; and
the communication apparatus 900 determines, when a first condition is satisfied if the first cell belongs to only the first cell group and the first beam includes N beams, that the second beam is one of the N beams.

The first condition includes:
the first cell group includes at least one single-beam cell; and/or
the first cell group includes a cell that also belongs to another cell group.

In a possible implementation, that the communication apparatus 900 determines, if the first cell belongs to the M cell groups and the first beam includes the M beams, that the second beam is one of the M beams specifically includes:
the communication apparatus 900 determines, if the first cell belongs to the M cell groups, the first beam includes the M beams and the first cell group is an i^{th} cell group in the M cell groups to which the first cell belongs, that the second beam is an i^{th} beam in the M beams, where i is an integer greater than 0 and not greater than N.

In a possible implementation, that the communication apparatus 900 determines, when the first condition is satisfied if the first cell belongs to only the first cell group and the first beam includes the N beams, that the second beam is one of the N beams specifically includes:
if the first cell belongs to only the first cell group, and the first beam includes the N beams, when the first condition is satisfied, the communication apparatus 900 determines that the second beam is a 1^{st} beam in the N beams.

In a possible implementation, that the communication apparatus 900 determines the third beam based on the second beam specifically includes one or more of the following:
if the second cell belongs to only the first cell group, and the second beam includes only one beam, the communication apparatus 900 determines that the third beam is the second beam;
if the second cell belongs to only the first cell group, and the second beam includes N beams, the communication apparatus 900 determines that the third beam is a beam in the second beam, the communication apparatus 900 determines that the third beam is the second beam, the communication apparatus 900 determines, when the second cell is a single-beam cell, that the third beam is a beam in the second beam, or the communication apparatus 900 determines, when the second cell is a multi-beam cell, that the third beam is the second beam, where N is an integer greater than 1; and
the communication apparatus 900 determines, if the second cell also belongs to at least one other cell group, the second beam includes only one beam and each of the other cell group corresponds to one beam, that the third beam includes the second beam and the beam corresponding to each of the other cell group.

In a possible implementation, that the communication apparatus 900 determines, if the second cell also belongs to the at least one other cell group, the second beam includes the only one beam and each of the other cell group corresponds to one beam, that the third beam includes the second beam and the beam corresponding to each of the other cell group specifically includes:
if the second cell also belongs to the at least one other cell group, the second beam includes the only one beam, and each of the other cell group corresponds to one beam, using, in a grouping order of the first cell group and each of the other cell group in cell grouping information, a beam corresponding to an i^{th} cell group in the first cell group and the other cell group as an i^{th} beam in the third beam determined by the communication apparatus 900, where i is an integer greater than 0.

In a possible implementation, the configuration information is further used to configure the cell or cell group to satisfy one of constraint rules, and the constraint rules include:
a cell in each cell group belongs to only a single cell group;
when there are a plurality of cells that belong to a plurality of cell groups in the cell group, the first cell is a cell that belongs to a plurality of cell groups;
when there are a plurality of cells that belong to a plurality of cell groups in the cell group, the plurality of cells that belong to a plurality of cell groups all belong to a same cell group; and
a plurality of cells that belong to a plurality of cell groups belong to totally different cell groups.

The following shows a possible diagram of a structure of a terminal device with reference to FIG. 10.

FIG. 10 is a simplified diagram of the structure of the terminal device. For ease of understanding and illustration, in FIG. 10, an example in which the terminal device is a mobile phone is used. As shown in FIG. 10, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

The input/output apparatus, such as a touchscreen, a display, or a keyboard, is mainly configured to: receive data input by a user and output data to the user.

It should be noted that some types of terminal devices may have no input/output apparatus.

When data needs to be sent, the processor performs baseband processing on the to-be-sent data, and then outputs a baseband signal to a radio frequency circuit. The radio frequency circuit performs radio frequency processing on the baseband signal, and then sends, via the antenna, a radio frequency signal in a form of an electromagnetic wave. When data is sent to the terminal device, the radio frequency circuit receives a radio frequency signal via the antenna, converts the radio frequency signal into a baseband signal, and outputs the baseband signal to the processor. The processor converts the baseband signal into data, and processes the data.

For ease of description, FIG. 10 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiver function may be considered as a transceiver unit of the terminal device, and the processor that has a processing function may be considered as a processing unit of the terminal device. As shown in FIG. 10, the terminal device includes a transceiver unit 1010 and a processing unit 1020. The transceiver unit may also be referred to as a transceiver, a transceiver machine, a transceiver apparatus, or the like. The processing unit may also be referred to as a processor, a processing board, a processing module, a processing apparatus, or the like.

Optionally, a component configured to implement a receiving function in the transceiver unit 1010 may be considered as a receiving unit, and a component configured to implement a sending function in the transceiver unit 1010 may be considered as a sending unit. In other words, the transceiver unit 1010 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1010 is configured to perform a sending operation and a receiving operation of the terminal device in the foregoing method embodiment, and the processing unit 1020 is configured to perform another operation other than the receiving operation and the sending operation of the terminal device in the foregoing method embodiment.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

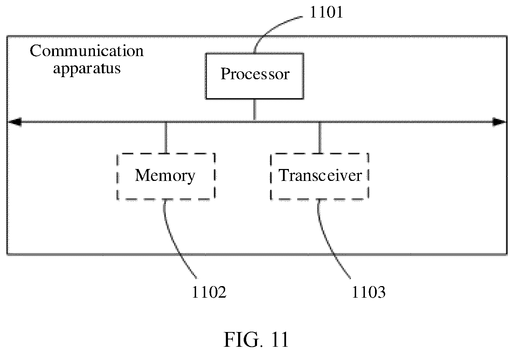

This application further provides a communication apparatus. FIG. 11 is another diagram of a structure of a communication apparatus according to an embodiment of this application. The communication apparatus may be configured to perform the steps performed by the network device in the embodiment shown in FIG. 7. For details, refer to related descriptions in the foregoing method embodiment.

The communication apparatus includes a processor 1101. Optionally, the communication apparatus further includes a memory 1102 and a transceiver 1103.

In a possible implementation, the processor 1101, the memory 1102, and the transceiver 1103 are separately connected through a bus, and the memory stores computer instructions.

The processing module 902 in the foregoing embodiment may be specifically the processor 1101 in this embodiment. Therefore, a specific implementation of the processor 1101 is not described again. The transceiver module 901 in the foregoing embodiment may be specifically the transceiver 1103 in this embodiment. Therefore, a specific implementation of the transceiver 1103 is not described again.

An embodiment of this application further provides a communication system. The communication system includes a terminal device and a network device. The terminal device is configured to perform all or some of the steps performed by the terminal device in the embodiment shown in FIG. 7. The network device is configured to perform all or some of the steps performed by the network device in the embodiment shown in FIG. 7.

An embodiment of this application further provides a computer program product including instructions. When the computer program product is run on a computer, the computer is enabled to perform the communication method in the embodiment shown in FIG. 7.

An embodiment of this application further relates to a computer-readable storage medium, including a computer program or instructions stored in the computer-readable storage medium. When the computer program or the instructions are executed by one or more computers, the steps of the method in the embodiment shown in FIG. 7 are implemented.

An embodiment of this application further relates to a computer program product including instructions. When the computer program product is run on a computer, the computer is enabled to perform the steps of the method in the embodiment shown in FIG. 7.

An embodiment of this application further relates to a chip apparatus, including a processor, configured to be connected to a memory, and invoke a program stored in the memory, so that the processor implements the method in the embodiment shown in FIG. 7. An embodiment of this application further relates to a communication system. The system includes the terminal device and the network device in the foregoing aspects.

Method or algorithm steps described in combination with the content disclosed in this application may be implemented by hardware, or may be implemented by a processor by executing software instructions. The software instruction may include a corresponding software module. The software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (Electrically Erasable Programmable Read-Only Memory, EEPROM), a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an application-specific integrated circuit (Application-Specific Integrated Circuit, ASIC). In addition, the ASIC may be located in a terminal. Certainly, the processor and the storage medium may alternatively exist in a first communication apparatus as discrete components.

It may be clearly understood by a person skilled in the art that, for the purpose of convenient and brief description, for a detailed working process of the foregoing system, apparatus, and unit, reference may be made to a corresponding process in the foregoing method embodiment, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements, to achieve the objective of the solution of this embodiment.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, the part contributing to the related technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A cell beam indication method, comprising:
receiving, by a terminal device, configuration information sent by a network device, wherein the configuration information is used to configure at least one cell group, and each cell group comprises a first cell and a second cell;
determining, by the terminal device, a second beam based on a first beam, wherein the first beam is a beam indicated via a first cell in a first cell group, the second beam is a beam corresponding to the first cell group, and the first cell group comprises at least one multi-beam cell; and
determining, by the terminal device, a third beam based on the second beam, wherein the third beam is a beam corresponding to a second cell in the first cell group.

2. The method according to claim 1, wherein the determining, by the terminal device, a second beam based on a first beam specifically comprises one or more of the following:
determining, by the terminal device if the first beam comprises only one beam, that the second beam is the first beam;
determining, by the terminal device if the first cell belongs to M cell groups and the first beam comprises M beams, that the second beam is one of the M beams, wherein M is an integer greater than 1;
determining, by the terminal device if the first cell belongs to only the first cell group and the first beam comprises N beams, that the second beam is the first beam, wherein N is an integer greater than 1; and
determining, by the terminal device when a first condition is satisfied if the first cell belongs to only the first cell group and the first beam comprises N beams, that the second beam is one of the N beams, wherein
the first condition comprises:
the first cell group comprises at least one single-beam cell; and/or
the first cell group comprises a cell that also belongs to another cell group.

3. The method according to claim 2, wherein
the determining, by the terminal device if the first cell belongs to M cell groups and the first beam comprises M beams, that the second beam is one of the M beams specifically comprises:
determining, by the terminal device if the first cell belongs to the M cell groups, the first beam comprises the M beams and the first cell group is an i^{th} cell group in the M cell groups to which the first cell belongs, that the second beam is an i^{th} beam in the M beams, wherein i is an integer greater than 0 and not greater than N.

4. The method according to claim 2, wherein
the determining, by the terminal device when a first condition is satisfied if the first cell belongs to only the first cell group and the first beam comprises N beams, that the second beam is one of the N beams specifically comprises:
if the first cell belongs to only the first cell group, and the first beam comprises the N beams, determining, by the terminal device, that the second beam is a 1^{st} beam in the N beams.

5. The method according to any one of claims 1 to 4, wherein the determining, by the terminal device, a third beam based on the second beam specifically comprises one or more of the following:
if the second cell belongs to only the first cell group, and the second beam comprises only one beam, determining, by the terminal device, that the third beam is the second beam;
if the second cell belongs to only the first cell group, and the second beam comprises N beams, determining, by the terminal device, that the third beam is a beam in the second beam, determining, by the terminal device, that the third beam is the second beam, determining, by the terminal device when the second cell is a single-beam cell, that the third beam is a beam in the second beam, or determining, by the terminal device when the second cell is a multi-beam cell, that the third beam is the second beam, wherein N is an integer greater than 1; and
determining, by the terminal device if the second cell also belongs to at least one other cell group, the second beam comprises only one beam and each of the other cell group corresponds to one beam, that the third beam comprises the second beam and the beam corresponding to each of the other cell group.

6. The method according to claim 5, wherein
the determining, by the terminal device if the second cell also belongs to at least one other cell group, the second beam comprises only one beam and each of the other cell group corresponds to one beam, that the third beam comprises the second beam and the beam corresponding to each of the other cell group specifically comprises:
if the second cell also belongs to the at least one other cell group, the second beam comprises the only one beam, and each of the other cell group corresponds to one beam, using, in a grouping order of the first cell group and each of the other cell group in cell grouping information, a beam corresponding to an i^{th} cell group in the first cell group and the other cell group as an i^{th} beam in the third beam determined by the terminal device, wherein i is an integer greater than 0.

7. The method according to any one of claims 1 to 6, wherein the configuration information is further used to configure the cell or cell group to satisfy one of constraint rules, and the constraint rules comprise:
a cell in each cell group belongs to only a single cell group;
when there are a plurality of cells that belong to a plurality of cell groups in the cell group, the first cell is a cell that belongs to a plurality of cell groups;
when there are a plurality of cells that belong to a plurality of cell groups in the cell group, the plurality of cells that belong to a plurality of cell groups all belong to a same cell group; and
a plurality of cells that belong to a plurality of cell groups belong to totally different cell groups.

8. The method according to any one of claims 1 to 7, wherein after the determining, by the terminal device, a third beam based on the second beam, the method further comprises:
determining, by the terminal device, a target beam based on the third beam; and
transmitting, by the terminal device, data with the network device using the target beam.

9. A cell beam indication method, comprising:
sending, by a network device, configuration information to a terminal device, wherein the configuration information is used to configure at least one cell group, and each cell group comprises a first cell and a second cell;
indicating, by the network device, a first beam to the terminal device via a first cell in a first cell group, wherein the first beam is used by the terminal device to determine a second beam corresponding to the first cell group, the second beam is used by the terminal device to determine a third beam corresponding to a second cell in the first cell group, and the first cell group comprises at least one multi-beam cell;
determining, by the network device, the second beam based on the first beam; and
determining, by the network device, the third beam based on the second beam.

10. The method according to claim 9, wherein the determining, by the network device, the second beam based on the first beam specifically comprises one or more of the following:
if the first beam comprises only one beam, determining, by the network device, that the second beam is one first beam;
determining, by the network device if the first cell belongs to M cell groups and the first beam comprises M beams, that the second beam is one of the M beams, wherein M is an integer greater than 1;
if the first cell belongs to only the first cell group, and the first beam comprises N beams, determining, by the network device, that the second beam is the first beam; and
determining, by the network device when a first condition is satisfied if the first cell belongs to only the first cell group and the first beam comprises N beams, that the second beam is one of the N beams, wherein
the first condition comprises:
the first cell group comprises at least one single-beam cell; and/or
the first cell group comprises a cell that also belongs to another cell group.

11. The method according to claim 10, wherein
the determining, by the network device if the first cell belongs to M cell groups and the first beam comprises M beams, that the second beam is one of the M beams specifically comprises:
determining, by the network device if the first cell belongs to the M cell groups, the first beam comprises the M beams and the first cell group is an i^{th} cell group in the M cell groups to which the first cell belongs, that the second beam is an i^{th} beam in the M beams, wherein i is an integer greater than 0 and not greater than N.

12. The method according to claim 10, wherein
the determining, by the network device when a first condition is satisfied if the first cell belongs to only the first cell group and the first beam comprises N beams, that the second beam is one of the N beams specifically comprises:
if the first cell belongs to only the first cell group, and the first beam comprises the N beams, when the first condition is satisfied, determining, by the network device, that the second beam is a 1^{st} beam in the N beams.

13. The method according to any one of claims 9 to 12, wherein the determining, by the network device, the third beam based on the second beam specifically comprises one or more of the following:
if the second cell belongs to only the first cell group, and the second beam comprises only one beam, determining, by the network device, that the third beam is the second beam;
if the second cell belongs to only the first cell group, and the second beam comprises N beams, determining, by the network device, that the third beam is a beam in the second beam, determining, by the network device, that the third beam is the second beam, determining, by the network device when the second cell is a single-beam cell, that the third beam is a beam in the second beam, or determining, by the network device when the second cell is a multi-beam cell, that the third beam is the second beam, wherein N is an integer greater than 1; and
determining, by the network device if the second cell also belongs to at least one other cell group, the second beam comprises only one beam and each of the other cell group corresponds to one beam, that the third beam comprises the second beam and the beam corresponding to each of the other cell group.

14. The method according to claim 13, wherein
the determining, by the network device if the second cell also belongs to at least one other cell group, the second beam comprises only one beam and each of the other cell group corresponds to one beam, that the third beam comprises the second beam and the beam corresponding to each of the other cell group specifically comprises:
if the second cell also belongs to the at least one other cell group, the second beam comprises the only one beam, and each of the other cell group corresponds to one beam, using, in a grouping order of the first cell group and each of the other cell group in cell grouping information, a beam corresponding to an i^{th} cell group in the first cell group and the other cell group as an i^{th} beam in the third beam determined by the network device, wherein i is an integer greater than 0.

15. The method according to any one of claims 9 to 14, wherein the configuration information is further used to configure the cell or cell group to satisfy one of constraint rules, and the constraint rules comprise:
a cell in each cell group belongs to only a single cell group;
when there are a plurality of cells that belong to a plurality of cell groups in the cell group, the first cell is a cell that belongs to a plurality of cell groups;
when there are a plurality of cells that belong to a plurality of cell groups in the cell group, the plurality of cells that belong to a plurality of cell groups all belong to a same cell group; and
a plurality of cells that belong to a plurality of cell groups belong to totally different cell groups.

16. A terminal device, comprising:
a transceiver module, configured to receive configuration information sent by a network device, wherein the configuration information is used to configure at least one cell group, and each cell group comprises a first cell and a second cell; and
a processing module, configured to determine a second beam based on a first beam, wherein the first beam is a beam indicated via a first cell in a first cell group, the second beam is a beam corresponding to the first cell group, and the first cell group comprises at least one multi-beam cell; and further configured to determine a third beam based on the second beam, wherein the third beam is a beam corresponding to a second cell in the first cell group.

17. A network device, comprising:
a transceiver module, configured to send configuration information to a terminal device, wherein the configuration information is used to configure at least one cell group, and each cell group comprises a first cell and a second cell; and
a processing module, configured to indicate a first beam to the terminal device via a first cell in a first cell group, wherein the first beam is used by the terminal device to determine a second beam corresponding to the first cell group, the second beam is used by the terminal device to determine a third beam corresponding to a second cell in the first cell group, and the first cell group comprises at least one multi-beam cell; further configured to determine the second beam based on the first beam; and further configured to determine the third beam based on the second beam.

18. A communication apparatus, wherein the communication apparatus comprises a transceiver module and a processing module; and
the transceiver module is configured to perform the receiving and sending operations according to any one of claims 1 to 8 or claims 9 to 15, and the processing module is configured to perform the processing operations according to any one of claims 1 to 8 or claims 9 to 15.

19. A communication apparatus, wherein the communication apparatus comprises a processor; and
the processor is configured to execute a computer program or computer instructions in a memory, to implement the method according to any one of claims 1 to 8 or claims 9 to 15.

20. A computer-readable storage medium, wherein the computer-readable storage medium stores a computer program or instructions, and when the computer program or the instructions are executed by one or more computers, the one or more computers are enabled to implement the method according to any one of claims 1 to 8 or 9 to 15.
